# EUROPEAN PATENT APPLICATION

(11) **EP 4 032 853 A1**
(43) Date of publication of application: **27.07.2022**
(21) Application number: 21870561.4
(22) Date of filing: 20.03.2021
(51) Int. Cl.: C01B 32/05, C01B 32/15, C01B 32/162, H01M 4/133, H01M 4/36

(54) **CARBON-BASED COMPOSITE MATERIAL, PREPARATION METHOD THEREFOR, AND APPLICATION THEREOF**

(30) Priority: 30.11.2020 CN 202011370284
(71) Applicant: Qingdao Hengnengda Energy Technologies Co., Ltd., Qingdao, Shandong 266000 (CN)
(72) Inventor: ZHANG, Yongheng, Qingdao Shandong 266000 (CN)
(74) Representative: Viering, Jentschura & Partner mbB Patent- und Rechtsanwälte
(86) International application number: PCT/CN2021/081939
(87) International publication number: WO 2022/110581

(57) **Abstract**

The invention discloses a carbon-based composite material and its preparation method and application, which belongs to the technical field of carbon material preparation. The carbon-based composite material is composed of the substrate, carbon film and structural carbon. The carbon film is loaded on the substrate surface, and the structural carbon grows on the carbon film forming an integrated structure with the carbon film. In the preparation process, the alkali metal and/or alkaline earth metal catalysts are used to make the carbon source deposit an integrated carbon film and structural carbon on the substrates surface, so as to avoid the use of binder. The carbon film and structural carbon improve the effective specific surface area of the composite material, increase the bonding strength and electrical contact performance between the carbon material and the substrate, and modify the electron, ion and atom transmission and chemical structure characteristics of the material surface. Therefore, the carbon-based composite materials prepared by this disclosure have excellent physical and chemical properties, which can be used for various battery electrodes, capacitor electrodes, various sensors, solar cell electrodes, electrolytic water hydrogen production electrodes, hydrogen storage materials, catalysts and catalyst carriers, composite materials, reinforcing materials, etc.

## Description

### TECHNICAL FIELD

The invention belongs to the technical field of carbon material preparation, in particular to a carbon-based composite material and a preparation method thereof. The invention provides a technology for modifying the morphology, structure, atomic, electron and ion transmission characteristics of the material surface. The carbon-based composite material prepared by the technology provided by this disclosure is used as battery and capacitor electrodes, various sensor electrodes, field emission electrodes, solar cell electrodes, electrolytic water hydrogen production electrodes, photocatalytic hydrogen production materials, catalysts and catalyst carriers, heat absorbing and dissipating materials, hydrogen storage materials, composite materials, reinforcing materials, etc.

### BACKGROUND TECHNOLOGY

Carbon materials have three isomers, namely diamond, graphite and amorphous carbon. These kinds of carbon have different physical and chemical properties and uses. Diamond is the hardest substance known in nature. Natural diamond contains 0.0025% - 0.2% nitrogen, with good thermal conductivity and semiconductor properties. (1) It has high temperature resistance, good thermal stability and does not melt at 3600°C. (2) It has good thermal conductivity and conductivity, and the conductivity decreases with the increase of temperature. (3) It has good chemical stability and resistance to acid, alkali and organic medium erosion, so it is used to manufacture electrodes, brushes, heat exchanger, coolers, etc. There are two kinds of graphite: natural graphite and artificial graphite. Amorphous carbon is the disordered arrangement of carbon atoms or the grain size is too small. The amorphous carbon obtained by carbonization of coal, natural gas, oil or other organic matter at a high temperature of 400-1200°C is porous carbon material, carbon black and activated carbon. The main application fields of graphite are refractories, conductive materials, electrode materials, corrosion-resistant materials, adsorption materials, friction materials, etc.

In 1991, Iijima, an electron microscope expert at NEC in Japan, discovered hollow carbon fibers and carbon nanotubes. Carbon nanotubes, diamond, graphite and C60 are allotrope of carbon. Carbon nanotube is a spiral tubular structure rolled by hexagonal reticular graphene sheets. Its end can be either open or closed by pentagonal and hexagonal graphene sheets. Single wall carbon nanotubes are composed of a layer of graphene sheets, which are hundreds of nanometers to several microns or even longer. Multi-walled carbon nanotubes are made of multi-layer graphene sheets. The gap between layers is about the same as that of graphite, about 0.343 nm, with a diameter of tens of nanometers and a length of more than a few microns. Carbon nanotube arrays are anisotropic in mechanical, thermal, optical and electrical properties, so they are more suitable for some applications. It has been studied as the best thermal interface material for infrared detectors, capacitor electrodes, lithium battery electrodes, solar cell electrodes, various gas sensors, biosensors and high-power integrated circuit chips.

At present, the electrode application of carbon materials needs to prepare slurry together with conductive agent and binder, and then apply the slurry to the current collector. After drying and rolling, the electrodes were produced for batteries and capacitors, gas sensor electrodes, biosensor electrodes, etc. The prepared electrode has the following defects in practical application: (1) The use of binder will greatly reduce the effective surface area of electrode material, resulting in the reduction of effective capacity of electrode material. (2) The use of binder will greatly reduce the electrical contact effect between electrode materials and current collector, and increase the working resistance of electrode. (3) At present, the electrode materials and the current collector are combined together by adhesive. In this way, a large amount of heat will be generated in the process of charge and discharge, and the thermal shock caused by thermal expansion and cold contraction will cause the contact condition between the electrode materials and the current collector to gradually deteriorate until the failure of the electrode. (4) The use of binder increases the thickness and weight of the electrode (The weight of electrode material, binder and conductive agent usually accounts for more than 30% of the weight of electrode.).

In order to solve the above inherent defects of traditional electrodes, scientists began to study the integrated electrode combining the electrode material and current collector into one body. It can be seen from the current research results that the self-supporting binder free electrode has larger capacity, better cycle stability and rate characteristics than the traditional electrode. The binder free electrodes studied mainly include: (1) The carbon cloth based binder free electrode is a composite electrode that loads or deposits active substances such as Si and metal oxides on the carbon cloth, (2) Graphene/carbon nanotube based binder free electrode is a diaphragm electrode processed from graphene/carbon nanotube and Si or metal oxide, (3) Carbon nanotube array based binder free electrode (carbon nanotube array electrode) is prepared by depositing vertically oriented carbon nanotube arrays on conductive substrates such as copper and stainless steel by CVD. Although the performance of these electrodes has been greatly improved, they still cannot meet the applications where the battery has higher requirements for energy density, cycling and rate performance such as energy storage, electric vehicles, electric aircraft and so on.

Scientists have encountered many unexpected problems when studying the application of carbon-based electrodes. These problems have not attracted the attention of scientists in all fields of applied research. Solving these problems is of great significance to improve the performance, reliability and application potential of carbon fiber array.

(1) Bonding strength between carbon fiber array and substrate. We know that a necessary condition for the application of carbon fiber array is to grow carbon fiber array on conductive substrate. The bonding strength between carbon fiber and substrate determines the reliability and service life of devices. Therefore, how to improve the bonding strength between carbon fiber array and substrate is the research focus and difficulty in this field. At present, the preparation technology of metal catalysts is to coat nano metal catalysts such as copper, iron, cobalt and nickel on the substrate to grow carbon fibers on the metal catalysts by chemical vapor deposition. There is no bonding between the carbon fibers in this carbon fiber array, and the bonding force between the carbon fibers and the substrate is also very weak. Therefore, the carbon fiber array is easy to fall off from the carbon fiber array and cause device failure. (2) Carbon fiber lacks self-supporting ability. Another disadvantage of the carbon fiber array prepared by the above method is that the diameter of the carbon fiber in the array is too small, from a few nanometers to tens of nanometers, and each carbon fiber cannot be supported independently. The distance between carbon fibers is only a few nanometers to more than ten nanometers, and they "collide" or even wind each other to support each other. During the field emission, one carbon fiber torn off from the substrate may cause several carbon fibers lose support and fallen down. In other words, the field emission failure of carbon fiber array may be carried out in an accelerated way. When the torn off carbon fibers reach certain amount, the whole field emission device will fail completely. (3) Electrostatic shielding effect between carbon fibers. The research results of scientists on the field emission performance of carbon fiber arrays show that there is a strong electrostatic shielding effect with high-density carbon fiber arrays leading to poor the field emission performance of the array. More importantly, this shielding effect greatly reduces the effective specific surface area of carbon fiber array resulting in weak performance.

The main preparation technology of carbon fiber arrays is to prepare carbon nanotube arrays on quartz, glass and silicon substrates by catalytic chemical vapor deposition. The preparation of such large area carbon nanotube arrays is based on ion sputtering, vacuum coating and sol-gel method to deposit a catalyst or catalyst precursor on the substrate, and then deposit the aligned carbon nanotubes under certain conditions. With the in-depth study of carbon nanotube arrays, scientists began to study the preparation of carbon nanotube arrays with specific pattern. The first method used to prepare the formatted array clusters is by using the porous template as catalyst template followed by chemical vapor deposition. The frequently used porous template is anodized aluminum oxide. The catalyst is deposited into the pores of porous substrate followed by depositing the carbon nanotube array in the pores by chemical vapor deposition. There is also a similar method called cover plate method. In this method, carbon nanotube array clusters are prepared by "covering" the parts that do not need to grow carbon nanotubes with a formatted cover plate. The characteristic of this method is that the catalyst precursor is coated on the substrate by sol-gel method, and then the coating is covered by a cover net, so that carbon nanotubes grow out of the gap of the cover net. Lithographic method has also been studied in recent years., The transition layer, catalyst layer and covering layer are deposited on the substrate by magnetron sputtering or vacuum evaporation, and then the catalyst format is "engraved" by laser engraving technology or ion beam grinding technology. Finally, the carbon nanotube array is grown by catalytic chemical vapor deposition. The characteristic of this preparation method is that it is convenient to design and deposit formatted carbon nanotube array clusters according to needs. Another advantage is that the required formatted carbon nanotube array clusters can be prepared directly on the working substrate. A recent catalyst preparation technology is called dip pen nanolithography (DPN). The principle of this technology is to "print" the catalyst precursor directly on the substrate with the writable probe of atomic force microscope, and then grow carbon nanotube arrays (clusters) by chemical vapor deposition. The advantage of this method is that the catalyst precursor can be directly "printed" on the substrate without template, vacuum conditions and complex deposition and etching process. More importantly, DPN technology can "print" the catalyst precursor at any required position very accurately. The printing dot diameter can be as small as 100 nm.

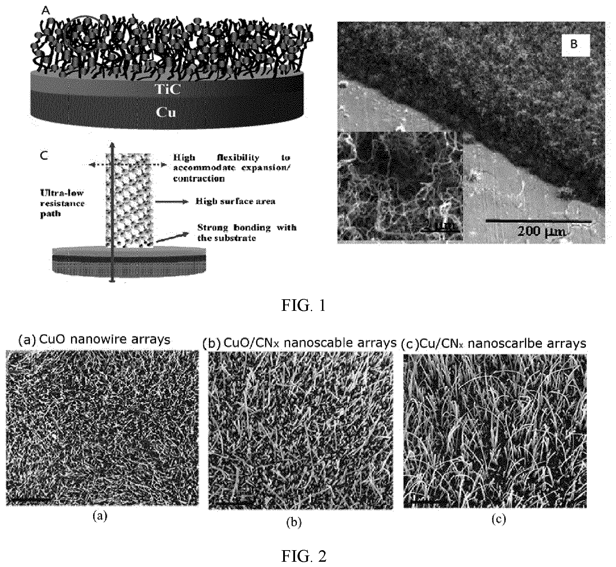

Lahiri et al directly deposited carbon nanotube arrays on copper substrate as binder free negative electrode of lithium-ion battery, as shown in Fig. 1. The electrode was prepared by depositing a layer of 20-25 nm Ti and Ni on a 50 micron thick copper foil, and then depositing carbon nanotube arrays by CVD at 500-900°C with H₂ + C₂H₂ mixture (1:2 ratio) as working gas. It can be seen from the figure that the deposited carbon nanotube arrays are intertwined with each other.

Tan et al. studied the in-situ deposition of nano array binder free electrodes on copper foil, copper mesh and copper braided mesh, as shown in Fig. 2. CuO nano array electrode (CNE) was prepared by heating and oxidizing the substrate in oxygen environment at 600°C/5h (Fig2. a). CuO/CNx nano array electrode (CCNE) was prepared by magnetron sputtering of CNE with graphite as target in N₂ environment (Fig2. b). Cu/CNx nano array electrode (CNNE) was prepared by reducing CCNE at 300°C/2h in hydrogen environment (Fig2. C).

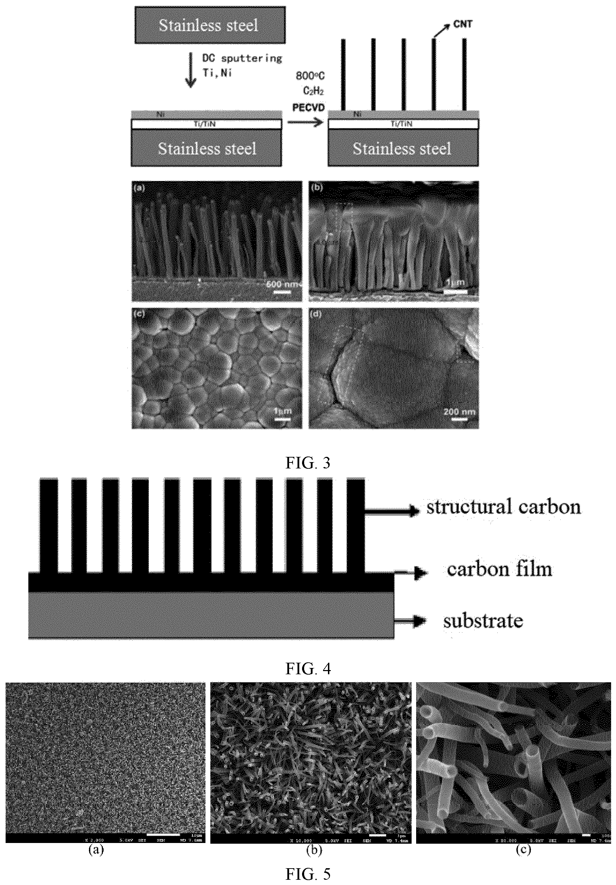

Wang et al. deposited Si/CNT electrode on a 15.5 mm diameter stainless steel wafer, as shown in Fig. 3. The electrode was prepared by depositing Ti/tin layer on stainless steel, followed by Ni catalyst layer. Using C₂H₂ as carbon source, CNT was deposited at 800°C. Then, a Si layer was deposited on the surface of CNT (SiH4 as Si source, 300°C).

### SUMMARY OF THE INVENTON

The objectives of the invention include but are not limited to the followings:
1. The first objective of the invention is to modify the surface structure, morphology, electron, atom and ion transmission characteristics, electrical conductivity, thermal conductivity, gas adsorption and desorption and other physical and chemical characteristics of the substrate material, and prepare a carbon-based composite material with better physical and chemical properties.
2. The second objective of the present invention is to provide a carbon-based composite material for various capacitors and battery electrodes
3. The third objective of the invention is to provide a carbon-based composite material pre-embedded with lithium, sodium, potassium, rubidium, cesium, magnesium, beryllium, calcium, strontium and barium elements such as Cu/carbon/LiCI, Al/carbon/KCl, Ti/carbon/K₂CO₃ and Al/carbon/MgCh, using as the positive and negative electrodes of hydrogen, lithium, sodium, potassium, rubidium, cesium, beryllium, magnesium, calcium, strontium and barium ion batteries and capacitors.
4. The fourth objective of the invention is to prepare the composite material electrodes composed of carbon-based composite material and other compounds such as carbon/LiFePO₄, /carbon/LiCl and carbon/LiCoO₂, which are applied to the positive and negative electrodes of hydrogen, lithium, sodium, potassium, rubidium, cesium, magnesium, calcium, strontium, barium ion batteries and capacitors, and improve the electrochemical performance of the electrodes.
5. The fifth objective of the invention is to provide carbon-based composite materials as electrolytic water hydrogen production electrodes, biosensors, gas sensors, infrared sensors and other sensors, solar cells, high-performance heat exchange devices, photocatalytic and electrolytic water hydrogen production materials, field emission and other applications.
6. The sixth objective of the invention is to improve the bonding strength, electrical contact and thermal conductivity between the carbon film and the substrate and improve the chemical stability of the electrode.
7. The seventh objective of the invention is to improve the effective specific surface area, capacity and sensitivity of the electrode.
8. An eighth object of the present invention is to reduce the thickness and weight of the electrode.
9. A ninth objective of the present invention is to provide a carbon-based composite material as a catalyst and catalyst support and to improve its performance.
10. The tenth object of the invention is to prepare carbon-based composites material for high-performance heat exchange materials.
11. The eleventh objective of the present invention is to provide a carbon-based composite material for reinforcing and modifying composites, such as carbon/CaCO₃ composites.
12. The twelfth objective of the invention is to use the carbon-based composite material for absorbing and emitting the electromagnetic waves.
13. The thirteenth objective of the present invention is to provide a carbon-based composite material for hydrogen storage materials such as carbon/Ni composites.

In order to achieve the above technical purposes, this disclosure provides a carbon-based composite material, which is composed of the substrate, carbon film and structural carbon. The carbon film is chemically bonded on the surface of the substrate and the structural carbon chemically bonded to the carbon film, and the substrate, carbon film and structural carbon form an integrated structure.

The substrate refers to the materials that are solid at room temperature except organic matter. The substrate includes metal, alloy, compound, non-metallic materials or non-metallic compound, such as copper, aluminum, nickel, iron, aluminum alloy, stainless steel, alumina, zinc oxide, glass, silicon, carbon, germanium, silicon dioxide, silicon carbide, and the materials with surface coating such as copper nickel plating, aluminum silver plating, silver gold plating and anodized aluminum. The shape of the substrate is any shapes, including one-dimensional, two-dimensional and three-dimensional structures such as particle, fiber, film, plate, block, solid, porous, interworking network and woven network structure. The surface area of the substrate is from 0.001 square nanometers to 1 billion square meters.

The carbon film contains the carbon element and one or more of other elements. The content of catalyst alkali metal and alkaline earth metal elements in the carbon film is 0.0000000000001wt% - 99.9999wt% and the content of other elements in the carbon film is 0.0000000000001wt% - 99.9999wt%. The thickness of the carbon film is 0.001 nm-1 mm. There is no binder between the carbon film and the substrate. The structural carbon contains the carbon and one or more of other elements. The content of the catalyst alkali metal and alkaline earth metal elements in the structural carbon is 0.0000000000001wt% - 99.9999wt% and the content of other elements in the structural carbon is 0.0000000000001wt% - 99.9999wt%.

The structural carbon can be any shape, including regular or irregular fiber, nanotubes and special shape such as spherical, hemispherical, flake, dendritic, spiral.

In addition, the substrate can be continuously or discontinuously covered by the carbon film and structural carbon by adjusting the coating position of the catalyst on the substrate. The area coated with the catalyst will be covered by the carbon film and structural carbon, while the area without coating the catalyst is not covered by the carbon film and structural carbon or is covered by a different carbon material. By using the disclosed method, the carbon-based composite material with a surface area of 0.001 square nm-1 billion square meters can be produced.

The first preparation method of carbon-based composite material according to the invention comprises the following steps:
(A1) The catalyst mixture is coated on the substrate surface followed by drying under required conditions.
(A2) The substrate loaded with the catalyst mixture is placed in a heating furnace with certain atmosphere followed by heating to a temperature of -50-1500°C and temperature holding of 0-1000 hours to decompose, melt and mix the catalyst mixture and let the catalyst infiltrate the substrate surface. This step is beneficial to the formation of carbon films and structural carbon with uniform thickness and high consistency of structure and morphology in the next step.
(A3) The furnace atmosphere is adjusted to replace the atmosphere in the step (A2) followed by adjusting the heating furnace to the reaction temperature of -50-1500°C. Then, the atmosphere in the heating furnace is adjusted as required followed by injecting the carbon containing organic matter into the heating furnace and temperature holding for 0-1000 hours. In this atmosphere, the carbon containing organic matter reacts under the action of catalyst to form the carbon film covering the substrate and structural carbon on the surface of carbon film. In some cases, the shape of the substrate can change after reaction. For example, the film like substrate is changed to powders and the large particle substrate is changed to smaller particle.
(A4) The furnace is turn off to let the furnace cool to -50-100°C to obtain the carbon-based composite material. During the cooling process, the furnace atmosphere is adjusted as needed to avoid side reactions.

The second preparation method of carbon-based composite according to the invention comprises the following steps:
(B1) The catalyst mixture is coated on the substrate surface followed by drying and subsequently coating the carbon containing organic matter on the substrate to prepare the reaction precursor. Or the catalyst mixture is mixed with the substrate, and then mixed with the carbon containing organic matter to prepare the reaction precursor.
(B2) The reaction precursor is placed in a heating furnace with certain atmosphere followed by heating the furnace to a temperature of -50-1500°C and temperature holding of 0-1000 hour to form the carbon film covering the substrate and structural carbon on the surface of the carbon film.
(B3) The furnace is turn off to cool the furnace to -50-100°C to obtain the carbon-based composite material. During the cooling process, the furnace atmosphere is adjusted as needed to avoid side reactions.

In the step (B1), for the granular substrate, it is preferred to mix the catalyst mixture with the substrate and carbon containing organic matter to prepare the reaction precursor. For the film, plate and block substrate, it is preferred to coat the catalyst mixture on the substrate surface followed by coating the carbon containing organic matter on the substrate to prepare the reaction precursors.

In the preferred scheme, the atmosphere in the steps (A2), (A3) and (A4), and (B2) and (B3) is adjusted according to the actual reaction process. When the atmosphere required between adjacent steps is consistent, the adjustment of atmosphere in subsequent steps is omitted.

In the preferred scheme, the substrate to be coated in steps (A1) and (B1) can be cleaned by various methods, such as chemical cleaning and physical cleaning, so as to eliminate the influence of surface covering on the manufacturing process. The chemical cleaning agent includes ethanol, acetone, xylene, formaldehyde, organic solvents, deionized water and surfactant. After cleaning, the substrate shall be dried under suitable conditions such as vacuum, various organic and inorganic gases, or mixed gases. Herein, the drying temperature is -50-1000°C, and the drying time is 0-1000 hours. Further preferably, the drying temperature is - 50-700°C.

In the preferred scheme, the catalyst in steps (A1) and (B1) refers to the simple substances, organic compounds and inorganic compounds of alkali metals and alkaline earth metals, as well as their mixture. These catalysts include Li, LiCl, Li₂CO₃, LiOH, LiH₂PO₄, LIF, lithium acetate, lithium citrate, butyl lithium, phenyl lithium, lithium stearate, lithium palmitate, NaCl, Na₂CO₃ NaOH, NaF, sodium ethanol, sodium methoxide, sodium formate, sodium acetate, sodium citrate, KCl, K₂CO₃, KOH, KF, K₃PO₄, potassium oxalate, potassium hydrogen phthalate, RbCL, RbNO₃, rubidium acetate, rubidium oxalate CsCL, Cs₂CO3, CaCO₃, Ca(OH)₂ CaCh, calcium gluconate, calcium lactate, calcium acetate, magnesium acetate, magnesium gluconate, MgCh, MgO, MgSO₄, SrCl₂, SrO, strontium gluconate, strontium acetate, barium acetate, barium citrate, BaCh, BaCO₃ and BaSO₄.

Preferably, the catalyst mixture in steps (A1) and (B1) is a solution, suspension, paste or powder with uniform catalyst dispersion. The catalyst can be prepared into water-based, organic-based, water and organic mixed solutions, suspensions or pastes, such as water-based, ethanol-based, acetone-based, or water/ethanol-based, acetone/ethanol-based solutions, suspensions or pastes. The mass fraction of catalyst in the catalyst mixture is 0.000000001% - 99.99%. Further, the additives, surfactant and thickeners can be added into the catalyst mixture. The additives refer to any compounds, which are mainly used for controlling the morphology of structural carbon and producing the carbon-based composite/compound composite materials and the carbon-based composite materials with the functions of hydrogen storage, catalyst and reinforcement, etc. The additives can react with the catalyst. For example, an appropriate amount of additive FeCh is added to the catalyst LiH₂PO₄ solution to prepare the carbon-based composite/LiFePO₄ composite material and the additive CoO is added to LiOH catalyst to produce carbon-based composite/LiCoO₂ composite materials as the cathode materials of lithium-ion battery. The additives can also be mixed evenly with the catalyst without reacting with the catalyst. The additives are evenly distributed in the composite materials. For example, an appropriate amount of additive LiFePO₄ is added to the catalyst LiH₂PO₄ mixed solution to prepare the carbon-based composite/LiFePO₄ composite materials as the electrodes. The mass fraction of the additives in the mixture is 0.000000001% - 99.9999%. The additives include but are not limited to FeCh, Fe(OH)₃, CuCl₂, ZnSO₄, Al₂O₃, Fe₂O₃, TiO₂ and ZnO₂. At the reaction temperature of step (A2), the additives can react with part of the catalyst to finally form the carbon-based composites/compound composites material.

Preferably, in the steps (A1) and (B1), the catalyst mixture is coated on the substrate by spraying, dipping, wiping, scraping, brushing, drenching, wiping, roller coating, printing, printing and other methods. The coated substrate is then dried in any possible atmosphere, such as vacuum, air, oxygen, inert gas, hydrogen, ammonia, inorganic and organic gases and various mixed gases. Herein, the drying temperature is -50-700°C, and the drying time is 0-10 hours. In the coating process, the specific pattern of catalyst coverage on the substrate can be obtained by porous template, mask and other methods.

Preferably, in the step (A2), the substrate coated with catalyst is placed in a closed heating furnace, and then the atmosphere in the heating furnace is adjusted. Then, the heating furnace is heated to a temperature of -50-1500°C followed by temperature holding of 0-1000 hours. In order to avoid the occurrence of side reaction between the catalyst and air, the atmosphere in the heating furnace is adjusted according to the difference of substrate material and catalyst system in this step. For example, if the substrate material is metal, the inert gas or organic gas or mixed gas atmosphere is used. If the substrate material is non-metallic, the inert gas, air, oxygen, organic gas or mixed gas atmosphere can be used.

Preferably, the carbon containing organic matter in steps (A3) and (B1) includes alcohols (such as methanol, ethanol, etc.), organic acids (such as formic acid, acetic acid, various saturated and unsaturated fatty acids, etc.), olefins, alkanes, alkynes, ketones (such as acetone, etc.), various carbonaceous gases (such as propane, methane, acetylene), sugars (such as starch, sucrose, etc.), various resins (such as phenolic resin) and mixtures of the above substances. In the step (A3), the atmosphere adjustment before the introduction of carbon containing organic matter is to eliminate the atmosphere in the previous step, and the atmosphere adjustment after the introduction of carbon containing organic matter is to avoid the side reactions or to make the gas in the atmosphere interact with carbon containing organic matter to form the carbon film and structural carbon. The heating method in the steps (A2), (A3) and (B2) refers to any method that can be realized, including electric heating, combustion heating, optical radiation heating and electromagnetic heating.

Preferably, the atmosphere in the steps (A4) and (B3) can be adjusted to any atmosphere as needed, such as nitrogen, argon, hydrogen, or a mixture of two or more gases, such as argon/hydrogen, nitrogen/hydrogen, or methane, acetylene, propane, various organic and inorganic gases. As long as these atmospheres can avoid the side reactions in the cooling process.

Preferably, the carbon-based composite obtained in the step (A4) and (B3) can be posttreated as required such as heat treatment and coating binders.

### COMPARED WITH THE PRIOR ART, THE INVENTION HAS THE FOLLOWING BENEFICIAL EFFECTS

1. The invention can prepare the carbon-based composite material with an integrated structure of the substrate, carbon film and structural carbon, and the carbon film is bonded on the substrate through chemical force. Therefore, the bonding strength, the electrical contact and heat exchange performance and stability of electrode is better.
2. The electrode prepared by this disclosure has lighter weight, thinner thickness, simpler preparation method and lower cost than the electrodes prepared by the prior art.
3. By adding the additive compounds into the catalyst, this disclosure can prepare the composite materials composed of the carbon-based composite materials and compound for applications as electrode materials, hydrogen storage materials, catalyst material, and reinforcement materials, etc.
4. This disclosure can prepare the carbon-based composite material pre-embedded with lithium, sodium, potassium, rubidium, cesium, magnesium, calcium, strontium and barium elements as the electrodes of battery and capacitor.
5. By changing the process parameters, such as the type and proportion of catalysts, the carbon-based composite materials with rich morphology of structural carbon can be prepared. However, the existing technology can only prepare composites with single morphology of structural carbon, generally carbon fiber arrays with diameters ranging from several nanometers to more than ten nanometers. The bonding force between single carbon fiber and substrate is weak.
6. This disclosure can prepare the positive and negative electrodes of batteries and capacitors, and the prior art can only prepare the positive or negative electrodes of batteries and capacitors.
7. This disclosure can modify the surface structure, morphological characteristics, conductive characteristics, thermal conductivity, gas adsorption and desorption characteristics, electron and ion transmission characteristics, absorption and emission of electromagnetic waves and other physical and chemical characteristics of conductive and non-conductive substrates.
8. The electrode prepared by this disclosure avoids the electrostatic shielding effect due to the large space distance between the structural carbon. Therefore, the electrodes prepared by this disclosure have larger effective specific surface area, larger electrode capacity, faster reaction rate, greater photoelectric conversion efficiency and higher electrode sensitivity than the electrodes prepared by the prior art.
9. The carbon-based composite material prepared by this disclosure can be applied to battery and capacitor electrodes, catalysts and catalyst carriers, various sensors, field emission electrodes, solar cell electrodes, electrolytic water hydrogen production electrodes, photocatalytic hydrogen production materials, infrared detector electrodes, heat exchange materials, electromagnetic wave absorption and emission materials, etc. But the prior art can only produce the composites with fewer applications.
10. This disclosure can greatly improve the hydrogen storage performance of the existing solid material and the mechanical properties of the interface between the solid material and the polymer.

### DESCRIPTION OF ATTACHED DRAWINGS

FIG. 1 illustrates a schematic description and scanning electron microscopy (SEM) photos of the carbon nanotube array deposited on Cu substrate using the existing technology.
FIG. 2 illustrates the SEM morphologies of the in-situ deposited carbon nanotube arrays on copper foil, copper mesh, copper braided mesh using existing technology as binder-free electrode.
FIG. 3 illustrates the schematic diagram and SEM morphologies of the Si/CNT electrode deposited on stainless steel disc of 15.5 mm in diameter using existing technology.
FIG. 4 illustrates the schematic diagram of the carbon-based composite material produced in accordance with this disclosure.
FIG. 5 illustrates the SEM morphologies of the carbon-based composite material produced by using stainless steel as substrate, K₂CO₃ as catalyst (600 °C, 1 hour, acetylene) in example 1 in accordance with this disclosure, (a) magnification 2000, (b) magnification 10000, (c) magnification 50000.
FIG. 6 illustrates the SEM morphologies of the carbon-based composite material produced by using stainless steel as substrate, Na₂CO₃ as catalyst in example 1 in accordance with this disclosure (600°C, 1 hour, acetylene), (a) magnification 2000, (b) magnification 10000, (c) magnification 50000.
FIG. 7 illustrates the SEM morphologies of the carbon-based composite material produced by using stainless steel as substrate, Li₂CO₃ as catalyst in example 1 in accordance with this disclosure (600°C, 1 hour, acetylene), (a) magnification 1000, (b) magnification 2000, (c) magnification 10000.
FIG. 8 illustrates the SEM morphologies of the carbon-based composite material produced by using stainless steel as substrate, KF as catalyst in example 1 in accordance with this disclosure (600°C, 1 hour, acetylene), (a) magnification 2000, (b) magnification 10000, (c) magnification 50000.
FIG. 9 illustrates (a) transmission electron microscopy (TEM) photos of carbon film and structural carbon formed in one body produced by using K₂CO₃ catalyst, (b) TEM photos of carbon film and structural carbon formed in one body produced by using Na₂CO₃ catalyst, (c) TEM photos of carbon film and structural carbon formed in one body produced by using Li₂CO₃ catalyst in example 1 in accordance with this disclosure.
FIG. 10 illustrates the SEM photos of the carbon-based composite material produced by using Cu foil of 8 um in thickness as substrate and Li₂CO₃ as catalyst in example 2 in accordance with this disclosure (600°C, 1 hour, acetylene).
FIG. 11 illustrates the SEM photos of the carbon-based composite material produced by using Cu foil of 8 um in thickness as substrate and K₂CO₃ as catalyst in example 2 in accordance with this disclosure (600°C, 1 hour, acetylene).
FIG. 12 illustrates the SEM photos of the carbon-based composite material produced by using A1 foil of 20 um in thickness as substrate and K₂CO₃ as catalyst in example 2 in accordance with this disclosure (600°C, 1 hour, acetylene).
FIG. 13 illustrates the SEM photos of the carbon-based composite material produced by using Si substrate and Li₂CO₃ catalyst in example 2 in accordance with this disclosure (600°C, 1 hour, acetylene).
FIG. 14 illustrates the SEM photos of the carbon-based composite material produced by using Si substrate and Li₂CO₃/Na₂CO₃/K₂CO₃ (molar mass ratio 1:1:1) catalyst in example 2 in accordance with this disclosure (600°C, 1 hour, acetylene), (a) magnification 5000, (b) magnification 2000 TEM.
FIG. 15 illustrates the SEM photos of the carbon-based composite material produced by using stainless steel as substrate and NaBr as catalyst in example 3 in accordance with this disclosure (600°C, 1 hour, acetylene), (a) magnification 20000, (b) magnification 50000.
FIG. 16 illustrates the SEM photos of the carbon-based composite material produced by using stainless steel as substrate and LiH₂PO₄ as catalyst in example 3 in accordance with this disclosure (600°C, 1 hour, acetylene), (a) magnification 20000, (b) magnification 50000.
FIG. 17 illustrates the SEM photos of the carbon-based composite produced by using Si as substrate and Na₂CO₃/LiCl (molar mass ratio 1:2) as catalyst in example 4 in accordance with this disclosure (650°C, 1 hour, acetylene), (a) magnification 20000, (b) magnification 60000.
FIG. 18 illustrates the SEM photos of the carbon-based composite material produced by using Si as substrate and K₂CO₃/Na₂CO₃ (molar mass ratio 1:1) as catalyst in example 5 in accordance with this disclosure (650°C, 1 hour, acetylene), (a) magnification 3000, (b) magnification 30000.
FIG. 19 illustrates the SEM photos of the carbon-based composite material produced by using Si as substrate and CH₃COONa as catalyst in example 6 in accordance with this disclosure (650°C, 1 hour, acetylene), (a) magnification 10000, (b) magnification 50000.
FIG. 20 illustrates the SEM photos of the carbon-based composite material produced by using Si as substrate and C₆H₅O₇Na₃.2H₂O as catalyst in example 6 in accordance with this disclosure (650°C, 1 hour, acetylene), (a) magnification 5000, (b) magnification 30000.
FIG. 21 illustrates the SEM photos of the carbon-based composite material produced by using silica substrate and KHCO₃:NaHCO₃:Li₂CO₃=1:8:1 (molar mass ratio) as catalyst in example 7 in accordance with this disclosure (600°C, 1 hour, acetylene), (a) magnification 1000, (b) magnification 5000.
FIG. 22 illustrates the SEM photos of the carbon-based composite material produced by using silica substrate and KHCO₃:NaHCO₃:Li₂CO₃=8:1:1 (molar mass ratio) catalyst in example 7 in accordance with this disclosure (600°C, 1 hour, acetylene), (a) magnification 5000, (b) magnification 20000.
FIG. 23 illustrates the SEM photos of the carbon-based composite material produced by using silica substrate and KHCO₃:NaHCO₃:LizCO₃=1:1:8 (molar mass ratio) catalyst in example 7 in accordance with this disclosure (600°C, 1 hour, acetylene), (a) magnification 600, (b) magnification 1000.
FIG. 24 illustrates SEM photos of the carbon-based composite material produced by using Si substrate and KHCO₃:NaHCO₃:Li₂CO₃=1:8:1 (molar mass ratio) catalyst in example 8 in accordance with this disclosure (600°C, 1 hour, acetylene), (a) magnification 5000, (b) carbon film and structural carbon formed in one body.
FIG. 25 illustrates SEM photos of the carbon-based composite material produced by using Si substrate and KHCO₃:NaHCO₃:Li₂CO₃=8:1:1 (molar mass ratio) catalyst in example 8 in accordance with this disclosure (600°C, 1 hour, acetylene), (a) magnification 2000, (b) magnification 10000.
FIG. 26 illustrates the SEM photos of the carbon-based composite material produced by using Si substrate and KHCO₃:NaHCO₃:LiNO₃=8:1:1 (molar mass ratio) catalyst in example 9 in accordance with this disclosure (650°C, 2 hour, acetylene), (a) magnification 500, (b) cross section view of structural carbon, (c) carbon film and structural carbon formed in one body, (d) carbon film and structural carbon formed in one body.
FIG. 27 illustrates the SEM photos of the carbon-based composite material produced by using Si substrate and KHCO₃:NaHCO₃:CsNO₃=8:1:1 (molar mass ratio) catalyst in example 9 in accordance with this disclosure (650°C, 2 hour, acetylene), (a) magnification 5000, (b) magnification 30000.
FIG. 28 illustrates the SEM photos of the carbon-based composite material produced by using Cu foil of 8 um in thickness as substrate, and CaCl₂ as catalyst in example 10 in accordance with this disclosure (600°C, 1 hour, acetylene), (a) magnification 1000, (b) magnification 3000.
FIG. 29 illustrates SEM photos of the carbon-based composite material produced by using Cu foil of 8 um in thickness and stainless-steel foil of 50 um in thickness as substrates, and K₂CO₃ as catalyst in example 11 in accordance with this disclosure (630°C, 1 hour, methane), (a) stainless steel substrate, magnification 10000, (b) stainless steel substrate, magnification 80000. (c) Cu substrate, magnification 1000, (d) Cu substrate, magnification 6000.

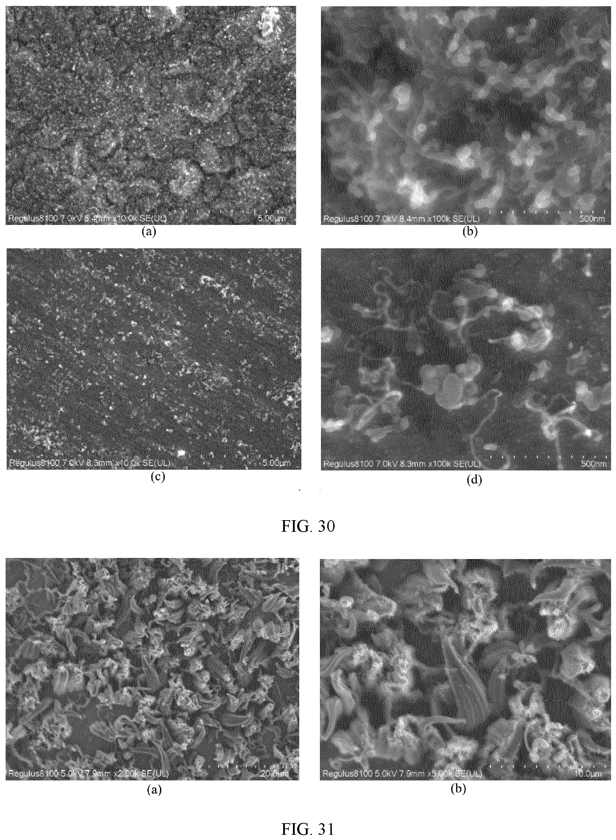

FIG. 30 illustrates the SEM photos of the carbon-based composite material produced by using Cu foil of 8 um in thickness and stainless steel foil of 50 um in thickness as substrates, and LiCl/Fe(NO₃)₃ and LiH₂PO₄/Fe(NO₃)₃ as catalysts in example 12 in accordance with this disclosure (600°C, 1 hour, acetylene), (a) Cu substrate and LiCl/Fe(NO₃)₃ catalyst, magnification 10000, (b) Cu substrate and LiCl/Fe(NO₃)₃ catalyst, magnification 100000, (c) stainless steel substrate and LiH₂PO₄/Fe(NO₃)₃ catalyst, magnification 10000, (d) stainless steel substrate and LiH₂PO₄/Fe(NO₃)₃ catalyst, magnification 100000.
FIG. 31 illustrates the SEM photos of the carbon-based composite material produced by using Cu foil of 8 um in thickness as substrate, and MgCh as catalyst in example 13 in accordance with this disclosure (550°C, 1 hour, acetylene), (a) magnification 2000, (b) magnification 5000.
FIG. 32 illustrates the SEM photos of the carbon-based composite material produced by using Ni foil of 20 um in thickness as substrate, and MgCh as catalyst in example 14 in accordance with this disclosure (530°C, 1 hour, toluene), (a) magnification 10000, (b) magnification 30000.
FIG. 33 illustrates the SEM photos of the carbon-based composite material produced by using Ni foil of 20 um in thickness as substrate, and MgCh/CaCh (mass ratio 1:1) as catalyst in example 15 in accordance with this disclosure (530°C, 1 hour, acetylene), (a) magnification 5000, (b) magnification 20000, (c) TEM, magnification 4000, (d) TEM, magnification 4000.
FIG. 34 illustrates the SEM photos of the carbon-based composite material produced by using Ni foil of 20 um in thickness as substrate, and Ba(NO₃)₃ as catalyst in example 16 in accordance with this disclosure (530°C, 1 hour, toluene), (a) magnification 10000, (b) magnification 30000.
FIG. 35 illustrates the SEM photos of the carbon-based composite material produced by using Cu foil of 8 um in thickness as substrate, Ba(NO₃)₃/LiCl/FeCl₃ (mass molar ratio 1:10:0.1) as catalyst mixture, AlPO₄ as additive in example 17 in accordance with this disclosure (550°C, 1 hour, acetylene), (a) magnification 5000, (b) magnification 10000.
FIG. 36 illustrates the SEM photos of the carbon-based composite material produced by using graphite paper as substrate, Ba(NO₃)₃/LiCl/FeCl₃ (mass molar ratio 1:10:0.1) as catalyst mixture in example 18 in accordance with this disclosure (550°C, 1 hour, acetylene), (a) magnification 5000, (b) magnification 10000.
FIG. 37 illustrates the SEM photos of the carbon-based composite material produced by using Cu foil of 8 um in thickness as substrate, Ba(NO₃)₃/LiCl/FeCl₃ (mass molar ratio 1:10:0.1) as catalyst mixture in example 19 in accordance with this disclosure (550°C, 1 hour, acetylene), (a) magnification 10000, (b) magnification 50000.
FIG. 38 illustrates the SEM photos of the carbon-based composite material produced by using Ti foil as substrate, LiCl as catalyst in example 20 in accordance with this disclosure (550°C, 1 hour, acetylene), (a) magnification 10000, (b) magnification 50000.
FIG. 39 illustrates the SEM and TEM photos of the carbon-based composite material produced by using CoO as substrate, LiCl/FeCl₃ as catalyst mixture in example 21 in accordance with this disclosure (600°C, 1 hour, polypropylene), (a) magnification 10000, (b) magnification 50000, (c)TEM magnification 8000, (d) TEM magnification 80000.
FIG. 40 illustrates the SEM and TEM photos of the carbon-based composite material produced by using Al₂O₃ as substrate, LiCl/FeCl₃ as catalyst mixture in example 22 in accordance with this disclosure (600°C, 1 hour, vegetable oil), (a) magnification 2000, (b) magnification 10000, (c)TEM magnification 20000, (d) TEM magnification 250000.
FIG. 41 illustrates the SEM photos of the carbon-based composite material produced by using Al₂O₃ as substrate, LiCl/CuCl₂/Ni(CH₃COO)₂ as catalyst mixture in example 23 in accordance with this disclosure (500°C, 1 hour, acetylene)), (a) magnification 5000, (b) magnification 20000.
FIG. 42 illustrates the SEM photos of the carbon-based composite material produced by using CaCO₃ as substrate and catalyst in example 24 in accordance with this disclosure (600°C, 1 hour, acetylene)), (a) magnification 2000, (b) magnification 50000.
FIG. 43 illustrates the charge and discharge curves of the cell assembled by using (a) Li foil and (b) composite produced by using Cu foil of 8 um in thickness as substrate and LiCl as catalyst in accordance with this disclosure as anodes, LiFePO₄ as cathode.

### DETAILED EXAMPLE DESCRITPTIONS

The examples described below aims to further explain the content of the invention, but not to limit the claim extent.

The examples described below aims to explain the method diversity of producing the carbon-based composite material in accordance with this disclosure.

The examples described below aims to show the morphological diversity of the carbon-based composite material produced in accordance with this disclosure. Examples described below aims to show the substrate, carbon film and structural carbon formed in one body of composite produced in accordance with this disclosure.

Examples described below aims to show the application of the carbon-based composite material produced in accordance with this disclosure as the anode of lithium-ion battery.

### Example 1

The composite material is produced via the method as described below. 1 g of K₂CO₃, Li₂CO₃, KF were dissolved into 20 g of deionized water containing 1% surfactant, separately, to prepare the catalyst solution. Then, the stainless-steel foil was coated with catalyst by spraying of catalyst solution, followed by drying in an oven at 80 °C. The catalyst coated stainless steel foil was then put into the tube furnace, followed by vacuuming the furnace and injecting the Ar gas. The furnace was then heated to 600 °C at a rate of 10 °C/min, followed by temperature dwell for 30 min. Then, acetylene gas was inlet into the furnace at a flow rate of 100 ml/min, followed by temperature dwell at 600 °C for 1 hour. Then, the furnace was turn off followed by inletting the Ar gas into the furnace to let the furnace cool down at 10 °C/min to room temperature to get the composite materials.

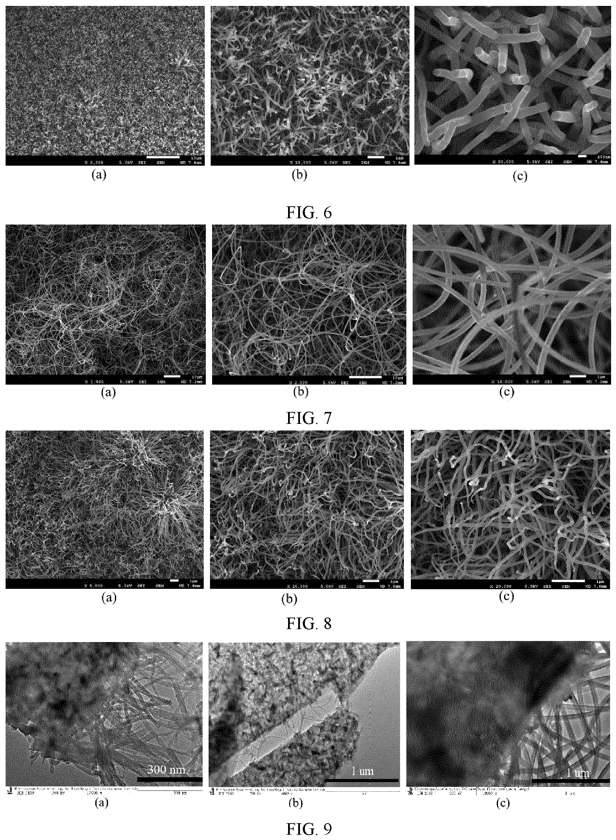

SEM (Jeol-6700) was used to examine the morphology of as fabricated composite material and the results are shown in FIG. 5. The composite material fabricated by using K₂CO₃ catalyst has a structural carbon of well aligned carbon nanotube array with a fiber diameter between 100 to 200 nm. The composite material fabricated by using Na₂CO₃ catalyst has a structural carbon of well aligned carbon nanotube array with a uniform fiber diameter of about 150 nm, as shown in FIG. 6. The composite material fabricated by using Li₂CO₃ catalyst has a structural carbon of intertwined carbon nanotube with a fiber diameter and length of about 150 nm and 30 um, accordingly, as shown in FIG. 7. The composite material fabricated by using KF catalyst has a structural carbon of well aligned, but slightly bended and thin-top carbon nanotube array with a fiber diameter of about 100 nm, as shown in FIG. 8. The carbon film and structural carbon are scratched away from the substrate surface using razor blade, followed by examination using TEM. FIG. 9 shows clearly that the structural carbon is consisted of carbon nanotube, which is attached to the carbon film forming into one body.

### Example 2

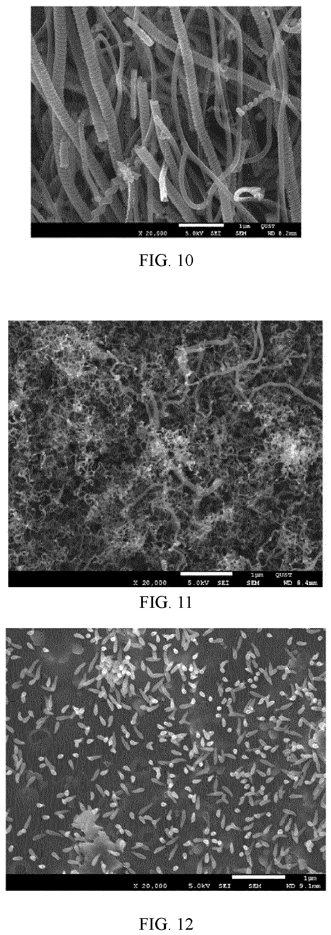

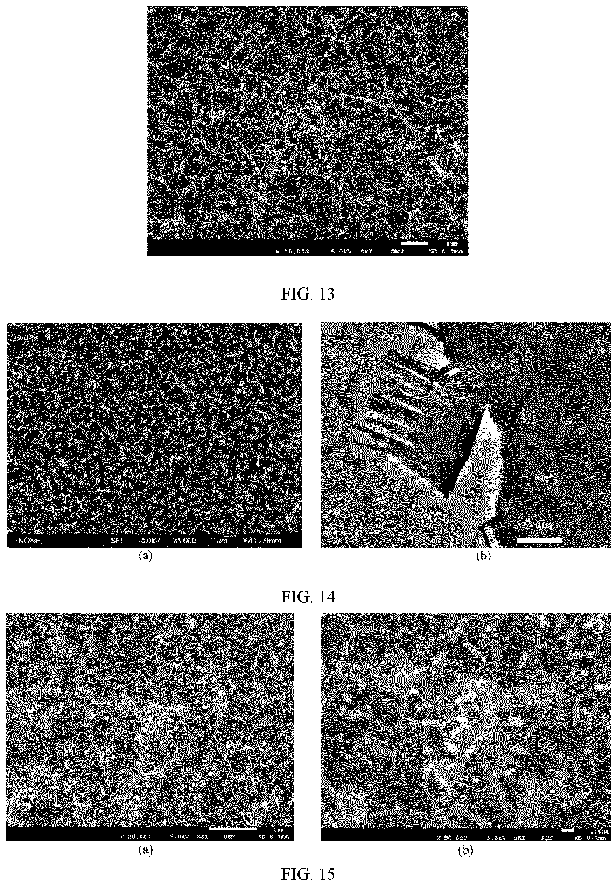

The carbon-based composite materials produced in this example and example 1 have the same structure, and the preparation method is as below. 1 g of K₂CO₃) and Li₂CO₃ were dissolved into 20 g of deionized water to prepare the catalyst solution. Then, the catalyst solution was sprayed on 8 micron thick copper foil, 20 micron thick aluminum foil and silicon wafer respectively, followed by drying them in a drying oven at 80°C. 0.3 g of K₂CO₃, 0.3 g of Li₂CO₃ and 0.3 g of Na₂CO₃ were dissolved into 20 g of deionized water to prepare the catalyst solution. Then, the catalyst solution was sprayed on the silicon wafer, followed by drying in a drying oven. Subsequently, the dried copper foil, aluminum foil and silicon wafer were placed in the tubular furnace, followed by vacuuming the tubular furnace and inletting argon gas, orderly. Then, the tubular furnace was heated from room temperature to 600°C at 10°C/min, and then the acetylene gas was introduced into the tubular furnace at 100 ml/min. After reacting at 600°C for 1 hour, the furnace was turn off and argon was introduced into the tubular furnace to let the tubular furnace cool to room temperature at 10°C/min to obtain copper substrate, aluminum substrate and silicon substrate composite materials. The obtained samples were observed by jeol-6700 scanning electron microscope, then. As shown in FIG. 10, the structural carbon of copper substrate composite material prepared by Li₂CO₃ catalyst is mainly spiral carbon fiber array with good orientation, and the fiber diameter is about 100 nm. FIG. 11 shows that the structural carbon of copper substrate composite material prepared by K₂CO₃ catalyst is mainly non-oriented and arbitrarily bent fibers with a fiber diameter of about 20 nm. The structural carbon of aluminum substrate composite material prepared by K₂CO₃ catalyst is carbon fibers with orientation and dispersed distribution, as shown in FIG. 12. The structural carbon of silicon substrate composite prepared by Li₂CO₃ catalyst is intertwined slender carbon nanotubes with a fiber diameter of about 20 nm, as shown in FIG. 13. The structural carbon of the silicon substrate composite materials prepared by Li₂CO₃/Na₂CO₃/K₂CO₃ mixed catalyst is a conical carbon nanotube with very good orientation, and the top diameter of the carbon nanotube is about 150 nm, as shown in FIG. 14.

### Example 3

The carbon-based composite materials produced in this example and example 1 have the same structure, and the preparation method is as below.

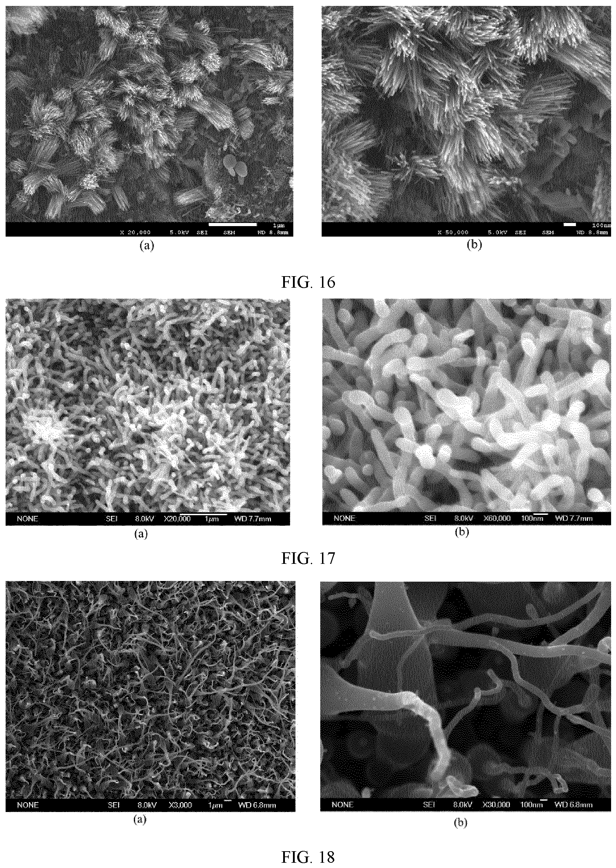

1 g of sodium bromide (NaBr) and lithium dihydrogen phosphate (LiH₂PO4) were dissolved into 20 g of deionized water with 1% surfactant to prepare the catalyst solution. The catalyst solution was then sprayed onto 50 micron thick stainless-steel foil. The coated stainless-steel foil was dried in an 80°C drying oven followed by placing the sample in a tubular furnace. Then, the tubular furnace was vacuumed and injected argon. The tubular furnace was heated from room temperature to 650°C at 10°C/min followed by temperature holding of 30 minutes to ensure good contact and reaction between the catalyst and the substrate surface, so that, the thickness of the formed carbon film will be uniform, and the morphology of the formed structural carbon will be uniform. Then, the furnace temperature was reduced to 600°C, and the acetylene gas was introduced into the tubular furnace at 100 ml/min. After reacting at 600°C for 1 hour, argon was introduced into the tubular furnace, and the tubular furnace was cooled at 10°C/min to room temperature to obtain the carbon-based composite material. The morphology of composite material was observed by jeol-6700 scanning electron microscope, as shown in FIG. 15. It can be seen from the figure that the structural carbon of the composite material prepared by NaBr catalyst is a carbon nanotube array with an opening at the top, a uniform thickness and a fiber diameter of about 50 nm. The structural carbon of the composite material prepared by lithium dihydrogen phosphate (LiH₂PO₄) catalyst consists of a clustered carbon fiber array with uniform thickness and diameter of about 5 nm, as shown in FIG. 16.

### Example 4

The carbon-based composite materials produced in this example and example 1 have the same structure, and the preparation method is as below. 5 g of Na₂CO₃/LiCl with a Na₂CO₃:LiCl = 1:2 (molar ratio) and an appropriate amount of distilled water were ground in a mortar into paste. Then, the paste catalyst is evenly coated on the silicon wafer and dried in the drying oven. The silicon wafer coated with catalyst was placed into the tubular furnace, followed by vacuuming the tubular furnace and injecting argon at a flow rate of 300 ml/min. Then, the furnace was heated to 650°C, followed by temperature dwell for 30 min. Then, acetylene was inlet into the furnace at the rate of 200 ml/min for 1 hour followed by cutting off acetylene and injecting argon to prevent oxidation of the example during cooling the furnace to room temperature at 15°C/min. The prepared silicon wafer substrate composites were observed by scanning electron microscope, as shown in FIG. 17.

### Example 5

The carbon-based composite materials produced in this example and example 1 have the same structure, and the preparation method is as below.

In this example, K₂CO₃/Na₂CO₃ (K₂CO₃:Na₂CO₃ = 1:1, molar ratio) is used as catalyst. The catalyst and appropriate amount of water were ground into paste for use. Then, the paste catalyst was evenly smeared on the silicon wafer followed by drying in the drying oven. The dried silicon wafer was heated in the tubular furnace to 650°C in air atmosphere at a heating rate of 5°C/min followed by temperature holding time of 100 minutes. Then, argon was inlet into the furnace at a flow rate of 300 ml/min for 10 minutes. Then, acetylene was inlet into furnace for 1 hour at a flow rate of 300 ml/min until the end of the reaction. Then, acetylene was cut off and argon was inlet into furnace as protective gas to prevent oxidization by air at a flow rate of 200 ml/min. When the furnace temperature was below 30°C, Ar gas was turn off and the sample was taken out of the furnace. The morphology of composite material was observed with jeol-6700 scanning electron microscope. As shown in FIG. 18, the structural carbon consists of a curved carbon nanotube with an irregular conical structure at the bottom and a tube diameter of about 200 nm at the top.

### Example 6

The carbon-based composite materials produced in this example and example 1 have the same structure, and the preparation method is as below.

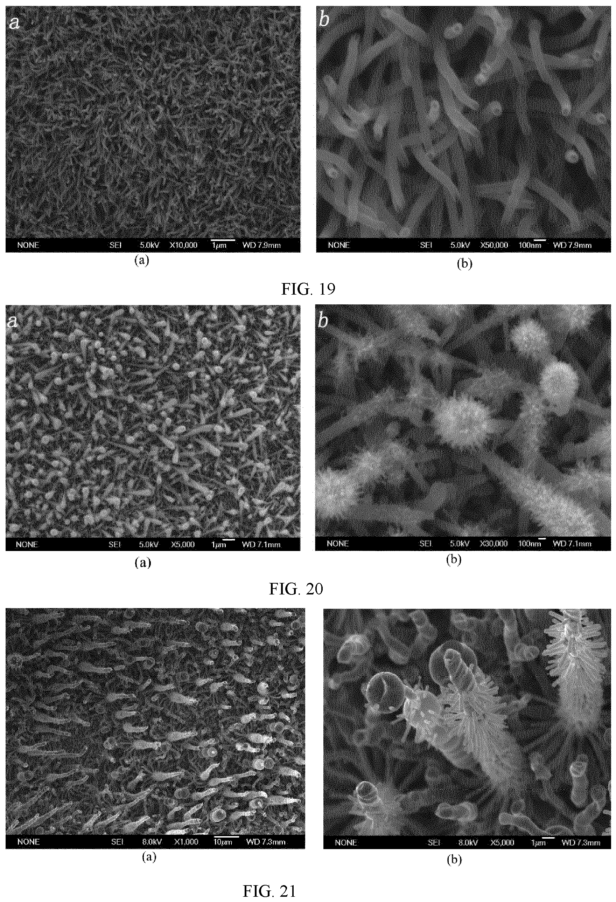

Certain amount of CH3COONa (sodium acetate) and C₆H₅O₇Na₃·2H₂O (sodium citrate) were ground into powder in a mortar. Then, appropriate amount of deionized water was added into the mortar followed by grinding the chemicals into the paste. Then, the paste was applied evenly on the silicon wafer followed by drying in an 80°C drying oven. After drying, the silicon wafer was placed into the tubular furnace followed by heating to 650°C and temperature holding of 30 minutes. Then, the argon was inlet into the furnace at a flow rate of 300 ml/min for 10 minutes. Then, the argon was turn off followed by inletting acetylene gas at the rate of 300 ml/min for 1 hour for reaction. Then, the furnace was turned off and the flow of acetylene was cut off. Then, argon was inlet into the furnace at a gas flow rate of 400 ml/min until the furnace temperature was below 30°C. The morphology of the composite material was observed by jeol-6700 scanning electron microscope. When sodium acetate is used as the catalyst, it can be seen that the structural carbon of the composite is a well oriented carbon nanotube array, which is evenly distributed, and the diameter of carbon nanotubes is about 100 nm, as shown in FIG. 19. When sodium citrate is used as the catalyst, as shown in FIG. 20, the structural carbon nanotubes of the composite are poorly oriented, and there is an emitting head on the top of the carbon nanotube. When the sample is enlarged to 30000 times, it can be seen that the carbon nanotubes is about 250 nm in diameter with rough top and burr shape. These burr like carbon structures may be caused by the residue of catalyst on the surface of carbon nanotubes.

### Example 7

The carbon-based composite materials produced in this example and example 1 have the same structure, and the preparation method is as below.

1 g of KHCO₃/NaHCO₃/Li₂CO₃ according to KHCO₃:NaHCO₃:Li₂CO₃ = 1:8:1 (molar ratio), 1 g of KHCO₃/NaHCO₃/Li₂CO₃ according to KHCO₃:NaHCO₃:Li₂CO₃ = 8:1:1 (molar ratio) and 1 g of KHCO₃/NaHCO₃/Li₂CO₃ according to KHCO₃:NaHCO₃:Li₂CO₃ = 1:1:8 (molar ratio) was prepared. Then, an appropriate amount of water was added into the prepared chemicals followed by grinding them into paste for use. Then, the paste catalyst was coated on quartz followed by drying in an 80°C drying oven. Then, the dried quartz sheet was heated in a tubular furnace to 650°C at 5°C/min, followed by temperature holding of 120 minutes. Then, argon was inlet into the furnace at a flow rate of 300 ml/min for about 10 minutes. In this step, argon gas will take away the air in the tubular furnace.

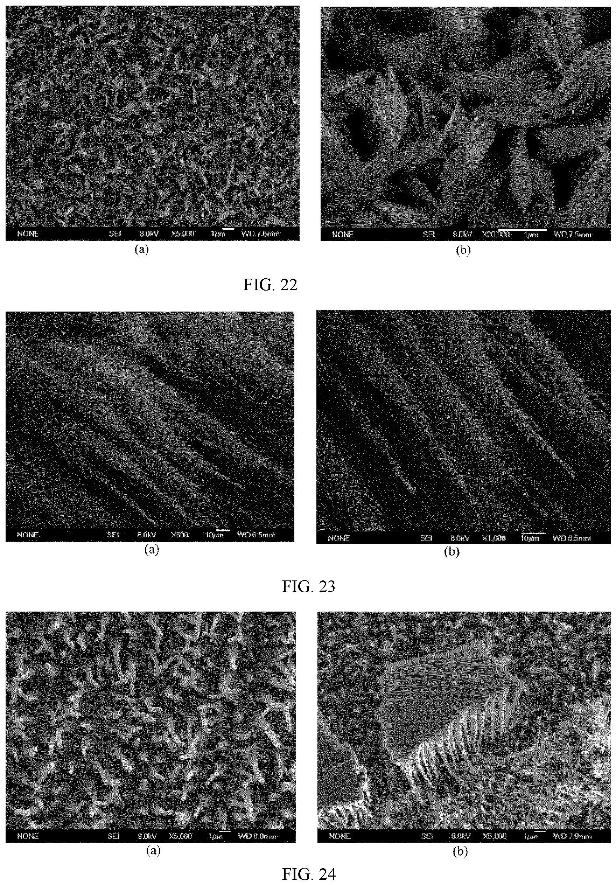

Then, the furnace temperature was reduced to 600°C followed by introducing acetylene into the furnace at the flow rate of 300 ml/min. After keeping the furnace temperature at 600°C for 2 hours, the acetylene gas was cut off followed by introducing argon as protective gas to prevent oxidization by air at the flow rate of 200 ml/min. The furnace was then cooled to about 30°C at a rate of 7°C/min. Finally, the argon was cut off and the sample was taken out. The morphology of composite material was observed with jeol-6700 scanning electron microscope. As shown in FIG. 21, the structural carbon of composite material prepared by catalyst with a KHCO₃:NaHCO₃:Li₂CO₃ = 1:8:1 is consisted of non-uniform carbon fibers with many small burr fibers on the surface of some carbon fibers. As shown in FIG. 22, the structural carbon of composite material prepared by the catalyst with a KHCO₃:NaHCO₃:Li₂CO₃ = 8:1:1 (molar ratio) catalyst system is like cabbage. As shown in FIG. 23, the structural carbon of composite material prepared by KHCO₃:NaHCO₃:Li₂CO₃ = 1:1:8 (molar ratio) catalyst system is like chrysanthemum coronarium. The research results show that the proportion of various elements in the catalyst system will greatly affect the morphology of the structural carbon of carbon-based composite material.

### Example 8

The carbon-based composite materials produced in this example and example 1 have the same structure, and the preparation method is as below.

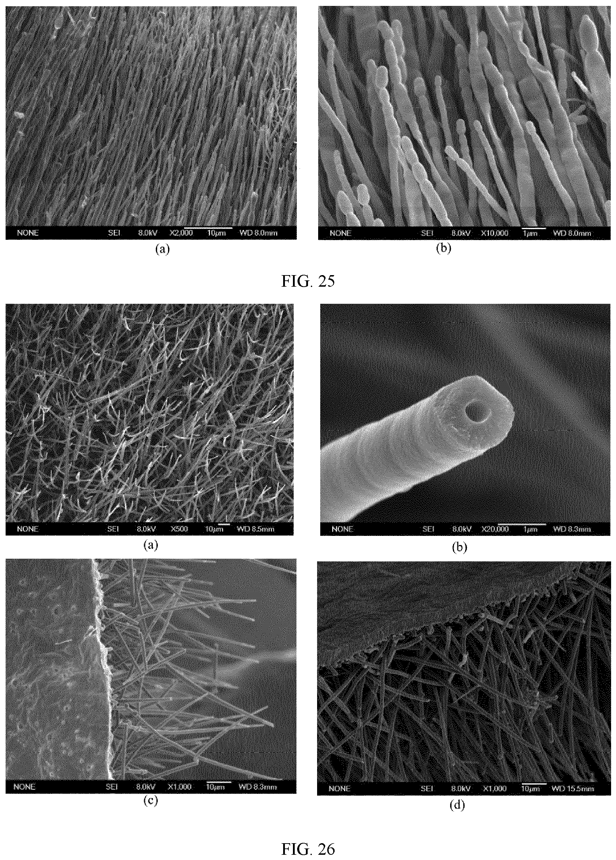

1 g of mixed catalyst KHCO₃/NaHCO₃/Li₂CO₃ was prepared according to KHCO₃:NaHCO₃:Li₂CO₃ = 1:8:1 (molar ratio). 1 g of mixed catalyst KHCO₃/NaHCO₃/Li₂CO₃ was prepared according to KHCO₃:NaHCO₃:Li₂CO₃ = 8:1:1 (molar ratio). Then, this catalyst mixture and an appropriate amount of water were ground into paste for use. Then, the paste was evenly coated on the silicon wafer followed by drying in an 80°C drying oven. The dried silicon wafer was heated in a tubular furnace to 650°C in air, with a heating rate of 5°C/min and a holding time of 120 minutes. Then, argon was inlet into the furnace at a flow rate of 300 ml/min for about 10 minutes. In this step, the air in the tubular furnace is fully discharged by argon. Then, the furnace temperature was reduced to 600°C followed by introducing acetylene to the furnace for 2 hours at a flow rate of 300 ml/min. After the reaction, the acetylene gas was cut off, and then argon was introduced to the furnace as a protective gas to prevent oxidization by air at a flow rate of 200 ml/min. The furnace was cooled to below 30°C at the rate of 7 °C/min. Then, argon was turned off and the example was taken out. The morphology of composite material was observed by jeol-6700 scanning electron microscope. As shown in FIG. 24, the structural carbon of composite material prepared with KHCO₃:NaHCO₃:Li₂CO₃ = 1:8:1 (molar ratio) catalyst system consists of conical carbon with good orientation and a small amount of carbon nanotubes. These structural carbon and carbon film form an integrated structure. As shown in FIG. 25, the structural carbon of composites prepared by KHCO₃:NaHCO₃:Li₂CO₃ = 8:1:1 (molar ratio) catalyst system has leek shape with good orientation.

### Example 9

The carbon-based composite materials produced in this example and example 1 have the same structure, and the preparation method is as below.

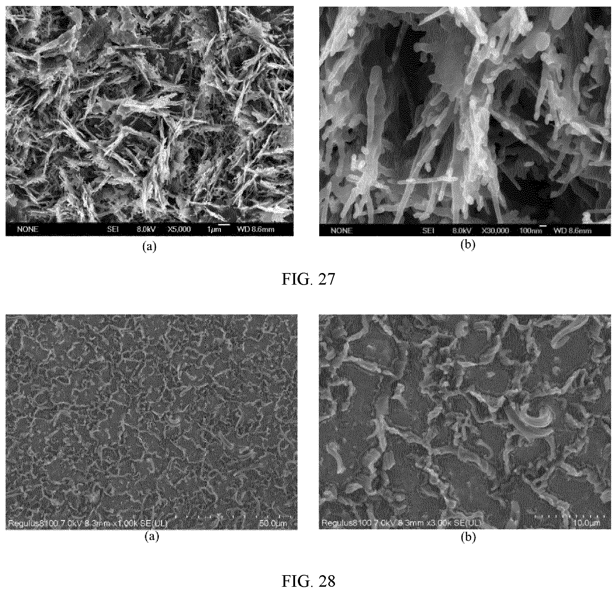

1 g of mixed catalyst with KHCO₃:NaHCO₃:LiNO₃ = 8:1:1 (molar ratio) and 1 g of mixed catalyst with KHCO₃:NaHCO₃:CsNO₃ = 8:1:1 (molar ratio) were prepared. Then, these mixed catalysts were added an appropriate amount of water followed by grinding them into paste for use. The paste catalyst was evenly coated on the silicon wafer followed by drying in an 80°C drying oven. Then, the dried silicon wafer was placed in a tubular furnace followed by heating to 650°C at a heating rate of 5°C/min. After temperature holding for 100 minutes, argon was introduced into the furnace at a flow rate of 300 ml/min for 10 minutes. Then, acetylene was inlet into the furnace for 2 hours at a flow rate of 300 ml/min. After the reaction, the acetylene gas was turned off and the argon was introduced at a flow rate of 200 ml/min as protective gas to prevent oxidation by air. When the furnace temperature was below 30°C, Ar gas was cut off and the sample was taken out. The morphology of composite material was observed by jeol-6700 scanning electron microscope. As shown in FIG. 26, the structural carbon of composite material deposited with KHCO₃:NaHCO₃:LiNO₃ = 8:1:1 catalyst system is dendritic carbon tubes, which grow on the carbon film forming an integrated structure, and the thickness of the carbon film is about 800 nm. As shown in FIG. 27, the structural carbon of composite material prepared with KHCO₃:NaHCO₃:CsNO₃ = 8:1:1 (molar ratio) catalyst system is difficult to describe the shape in language. The great difference of the shape of the two composites is due to the difference of one catalyst.

### Example 10

The carbon-based composite materials produced in this example and example 1 have the same structure, and the preparation method is as below. 2 g of CaCl2 was dissolved into 38 g of deionized water containing 0.1% surfactant TX-100 to prepare a catalyst mixture. Then, the 8 micron thick copper foil was evenly sprayed with the catalyst mixture followed by drying in a dry oven at 80°C for 20 minutes. Then, the sample was placed in a heating furnace followed by vacuuming the heating furnace and injecting acetylene gas. Then, the furnace was heated from room temperature to 600°C (heating time 45 minutes) followed by temperature holding of 1 hour. Finally, the power supply was turned off to let the furnace cool naturally to 50°C, and then the sample was taken out. The morphology of the sample was observed by scanning electron microscope, and the results are shown in FIG. 28. It can be seen from the figure that the structural carbon of the composite material has an irregular steep protrusion with a width of about 1 micron.

### Example 11

The carbon-based composite materials produced in this example and example 1 have the same structure, and the preparation method is as below.

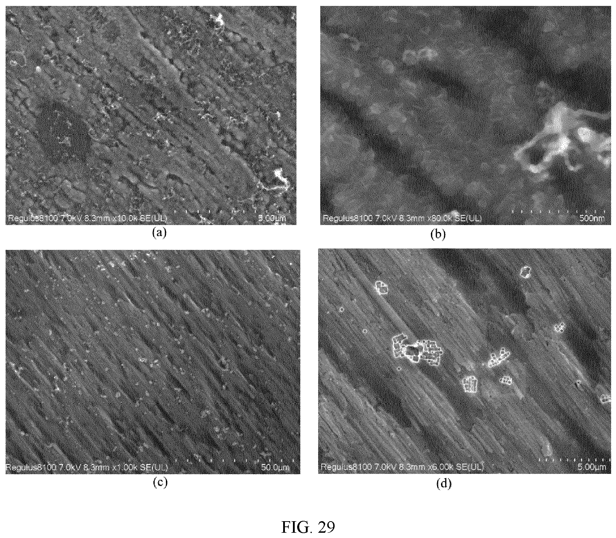

2 g of K₂CO₃ was dissolved into 38 g of deionized water containing 0.1% surfactant TX-100 to prepare a catalyst solution. The catalyst solution was sprayed on 50 micron thick stainless-steel foil and 8 micron thick copper foil, respectively. The stainless-steel foil and copper foil were dried in a dry oven at 80°C for 20 minutes and then placed in a furnace. After vacuuming the furnace, methane gas was inlet into the furnace. Then, the furnace was heated from room temperature to 630°C (heating time 45 minutes) followed by temperature holding of 1 hour. Then, the power supply was turn off to let the furnace cool naturally to 50°C, and then the sample was taken out. The morphology of the composite was observed by scanning electron microscope, and the results are shown in FIG. 29. It can be seen from FIGs 29a and 29b that the structural carbon deposited on stainless steel is formed by relatively uniform 50 nm flakes and particles. It can be seen from FIGs 29c and 29d that the structural carbon deposited on copper is formed by mutual bonding of strips about 500 nm wide growing in a specific direction.

### Example 12

The carbon-based composite materials produced in this example and example 1 have the same structure, and the preparation method is as below.

2 g of LiCl and 0.4 g of Fe(NO₃)₃ were dissolved into 38 g of deionized water to prepare LiCl/Fe(NO₃)₃ catalyst mixture. The mixture was then sprayed onto 8 micron copper foil. 2 g of LiH₂PO₄ and 0.4 g of Fe(NO₃)₃ were dissolved into 37.6 g of deionized water to prepare LiH₂PO₄/Fe(NO₃)₃ catalyst mixture, which was sprayed onto 50 micron stainless steel foil. Then, the above samples were dried in an 80°C drying oven for 20 minutes followed by placing the samples in a furnace. After vacuuming the furnace, acetylene gas was inlet into furnace. Then, the furnace was heated to 600°C (heating time 45 minutes) followed by temperature holding of 1 hour. Then, the furnace was turn off to let it cool to 300°C followed by vacuuming the furnace. When the furnace temperature was 30°C, the example was taken out for examination. The morphology of the sample was observed by scanning electron microscope, and the results are shown in FIG. 30. It can be seen from FIGs 30a and 30b that the structural carbon of composite deposited by LiCl/Fe(NO₃)₃ catalyst system consists of a curved carbon fiber with a diameter of about 50 nm, which is intertwined and bonded with each other. It can be seen from FIGs 30c and 30d that the carbon structure of composites deposited by LiH₂PO₄/Fe(NO₃)₃ catalyst system is consisted of particles with a diameter of about 20 nm which are bonded together forming the main carbon structure with few carbon fibers of about 10 nm in diameter.

### Example 13

The carbon-based composite materials produced in this example and example 1 have the same structure, and the preparation method is as below.

2 g of MgCl₂ was dissolved into 38 g of deionized water to prepare a catalyst mixture. The 8 micron thick copper foil was evenly sprayed with the catalyst mixture followed by drying in a dry oven at 80°C for 20 minutes. Then, the sample was placed in the furnace, followed by vacuuming the furnace and injecting acetylene gas. The furnace was heated from room temperature to 500°C (heating time 45 minutes) and the temperature was hold for 1 hour. Then the power was turn off to let the furnace cool naturally. When the temperature of the furnace was 300°C, the furnace was vacuumed and then cooled continually to 30°C. The sample was then taken out of the furnace. The morphology of the sample was observed by scanning electron microscope, and the results are shown in FIG. 31. It can be seen from the figure that the structural carbon of the prepared composite material is mainly composed of better oriented and regular conical structure mixed with a small amount of fibrous carbon.

### Example 14

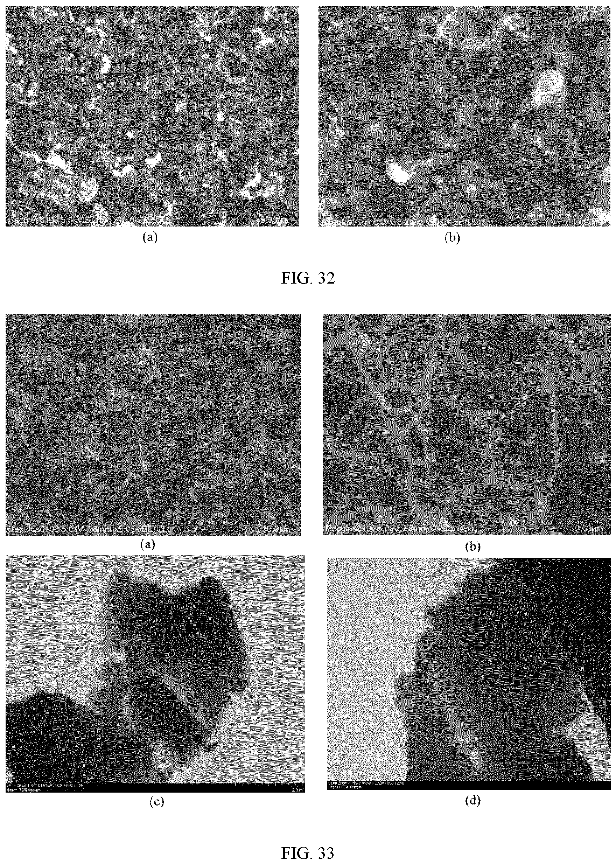

The carbon-based composite materials produced in this example and example 1 have the same structure, and the preparation method is as below. 2 g of MgCl₂ was dissolved into 38 g of deionized water to prepare a catalyst mixture. The 20 micron thick nickel foil washed with acetone was evenly sprayed with the catalyst mixture and dried in a dry oven at 80°C for 20 minutes. Then the sample was placed in the heating furnace followed by vacuuming the furnace and injecting toluene solution. Then, the furnace was heated to 530°C (heating time 45 minutes) followed by temperature holding of 1 hour. Then, the furnace was turn off to let the furnace cool naturally. When the temperature of the heating furnace was 300°C, the furnace was vacuumed. When the furnace temperature was 30°C, the sample was taken out. The morphology of the sample was observed by scanning electron microscope, and the results are shown in FIG. 32. It can be seen from the figure that the structural carbon of the prepared composite material consists of mainly intertwined carbon fibers with a diameter of about 50 nm and a small amount of special-shaped carbon.

### Example 15

The carbon-based composite materials produced in this example and example 1 have the same structure, and the preparation method is as below. 1 g of MgCl₂ and 1 g of CaCl₂ were dissolved into 38 g of deionized water to prepare a catalyst mixture. The 20 micron thick nickel foil washed with acetone was evenly sprayed with the catalyst mixture followed by drying in vacuum oven at 80°C for 20 minutes. Then the sample was placed in the heating furnace, followed by vacuuming and injecting acetylene gas. Then the furnace was heated from room temperature to 530°C (heating time 45 minutes) followed by temperature holding of 1 hour. Then the furnace was turn off to let the furnace cool naturally. When the temperature of the heating furnace was 300°C, the furnace was vacuumed. When the furnace temperature was 30°C, the sample was taken out. The morphology of the sample was observed by scanning electron microscope, and the results are shown in Fig. 33. As can be seen from Fig. 33 (a) and (b), the structural carbon of the prepared composite is mainly linear and helical fibers with a diameter of about 100 nm. The electrode was scraped off the copper foil with a blade, and then observed with transmission electron microscope. It can be seen that the structural carbon is connected together through carbon film, as shown in Fig. 33 (c) and (d).

### Example 16

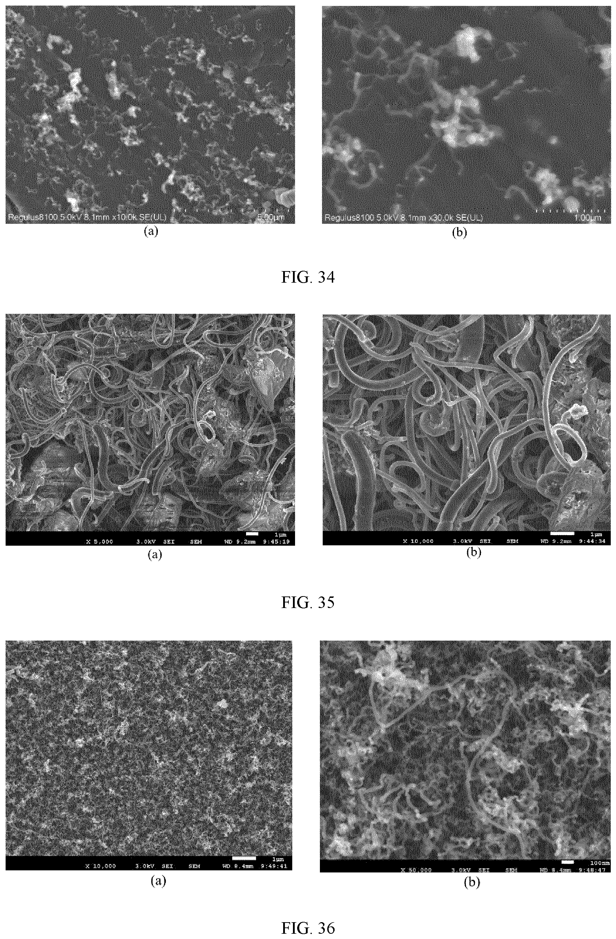

The carbon-based composite materials produced in this example and example 1 have the same structure, and the preparation method is as below. 2 g of Ba(NO₃)₃ was dissolved into 38 g of deionized water to prepare a catalyst mixture. The 20 micron thick nickel foil washed with acetone was evenly sprayed with the catalyst mixture and dried in a vacuum oven at 80°C for 20 minutes. Then, the sample was placed in the heating furnace followed by vacuuming the heating furnace and injecting toluene liquid. Then the furnace was heated from room temperature to 530°C (heating time 45 minutes) followed by temperature holding for 1 hour. Then the furnace was turn off to let the furnace cool naturally. When the temperature of the heating furnace was 300°C, the furnace was vacuumed. When the furnace temperature was 30°C, the sample was taken out. The morphology of the sample was observed by scanning electron microscope, and the results are shown in FIG. 34. It can be seen from the figure that the structural carbon of the prepared composites consists of a small amount of granular carbon and fibers with a diameter of 30 to 100 nm.

### Example 17

The carbon-based composite materials produced in this example and example 1 have the same structure, and the preparation method is as below.

2 g of Ba(NO₃)₃, 20 g of LiCl and 0.2 g of FeCl3 and 77.8 g of deionized water were mixed to prepare a mixed catalyst solution. 1 g of aluminum phosphate powder was dispersed in 10 g of mixed catalyst solution to prepare a mixed catalyst suspension of catalyst and solid additives. The copper foil was evenly sprayed with mixed catalyst suspension and dried in at 80°C vacuum drying oven for 20 minutes. Then, the copper foil was placed in the heating furnace followed by vacuuming and inletting acetylene gas. Then, the heating furnace was heated from room temperature to 550°C followed by temperature holding of 1 hour. Then, the furnace was turn off to cool the heating furnace to 300°C. Then, the furnace was vacuumed. When the furnace temperature was 30°C, the sample was taken out. The morphology of the sample was observed by scanning electron microscope, and the results are shown in FIG. 35. It can be seen from the figure that the structural carbon is consisted of mainly short fibrous protrusions and the aluminum phosphate powder that is adhered and wound together by long carbon fibers. The diameter of carbon fiber is 200 nm to 500 nm. This structure ensures the surface conductivity of aluminum phosphate powder and good electrical contact between aluminum phosphate and copper substrate composite.

### Example 18

The carbon-based composite materials produced in this example and example 1 have the same structure, and the preparation method is as below.

2 g of Ba(NO₃)₃, 20 of g LiCl and 0.2 g of FeCl₃ and 77.8 g of deionized water containing 1 wt% of surfactant TX-100 were mixed to prepare a mixed catalyst solution. The graphite paper was evenly sprayed with a thin layer of mixed catalyst solution followed by drying in an 80°C vacuum oven for 20 minutes. Then, the samples were put into the furnace followed by vacuuming and inletting acetylene gas. Then, the furnace was heated to 550°C followed by temperature holding for 1 hour. Then the furnace was turn off to let the furnace cool naturally. When the furnace temperature was 300°C, the heating furnace was vacuumed. When the furnace was 30 °C, the samples were taken out. The morphology of the sample was observed by scanning electron microscope, and the results are shown in FIG. 36. It can be seen from the figure that the structural carbon consists of carbon fibers with a diameter of about 20 nm, which are intertwined with each other.

### Example 19

The carbon-based composite materials produced in this example and example 1 have the same structure, and the preparation method is as below.

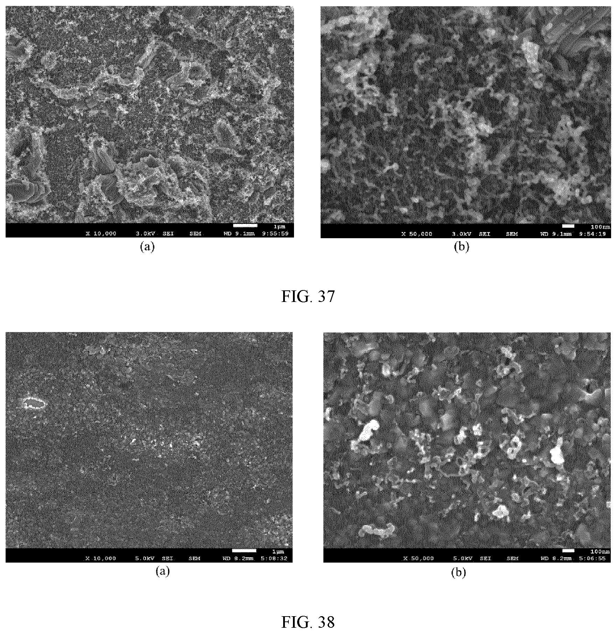

2 g of Ba(NO₃)₃, 20 g of LiCl, 0.2 g of FeCl₃ and 77.8 g of deionized water were mixed to prepare a mixed catalyst solution. The copper foil was evenly sprayed with mixed catalyst solution and dried in an 80°C vacuum drying oven for 20 minutes. Then, the copper foil was placed in the heating furnace followed by vacuuming the heating furnace before passing acetylene gas. The heating furnace was heated from room temperature to 550°C with a temperature dwell of 1 hour. Then, the furnace was turn off to let it cool naturally. When the temperature of the heating furnace is 300°C, the furnace was vacuumed. When the furnace temperature was 30°C, the samples were taken out. The morphology of the sample was observed by scanning electron microscope, and the results are shown in FIG. 37. It can be seen from the figure that the structural carbon consists of a dead tree pile carbon fiber with a diameter of about 1 micron, which is evenly distributed in the intertwined carbon fibers with a diameter of about 20 nm.

### Example 20

The carbon-based composite materials produced in this example and example 1 have the same structure, and the preparation method is as below.

2 g of LiCl was dissolved into 98 g of deionized water to prepare a 2 wt.% catalyst solution. The 100 micron thick titanium foil was evenly sprayed with catalyst solution followed by drying in a 100°C drying oven for 10 minutes. The samples were then put into the heating furnace followed by vacuuming and inletting acetylene gas. The furnace was then heated to 550°C with a temperature dwell of 1 hour. Then, the furnace was turn off followed by vacuuming the furnace at 300°C. When the furnace was cooled to 30°C, the sample was taken out. The morphology of the sample was observed by scanning electron microscope, and the results are shown in FIG. 38. It can be seen from the figure that the structural carbon consists of granular carbon and very short carbon fibers.

### Example 21

The carbon-based composite materials produced in this example and example 1 have the same structure, and the preparation method is as below.

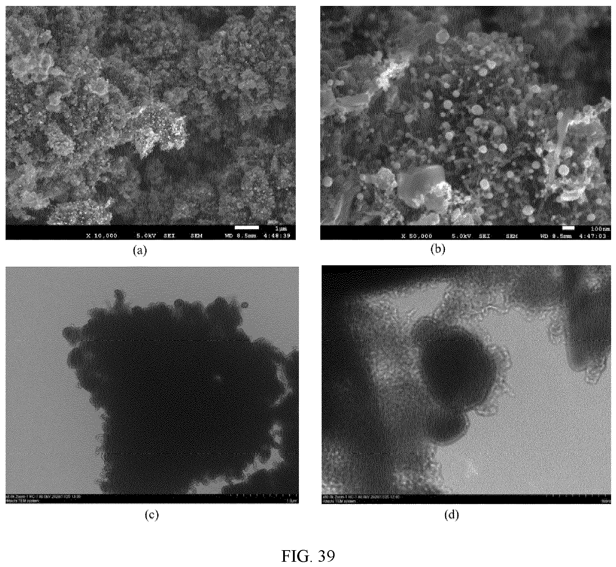

2 g of LiCl and 0.2 g of FeCl3 were dissolved into 38 g of deionized water to prepare the composite catalyst solution. Then, 5 g of CoO powder and 1 g of composite catalyst solution were evenly mixed and dried in a 100°C drying oven for 20 minutes followed by grinding with an appropriate number of polypropylene particles to prepare the reaction precursor. Then, the reaction precursor was put into the heating furnace followed by vacuuming and introducing nitrogen. The heating furnace was then heated to 600°C with a temperature dwell of 1 hour. The furnace was then turn off followed by vacuuming at 300°C. When the temperature of the heating furnace was 30°C, the samples were taken out. The morphology of the sample was observed by scanning electron microscope, and the results are shown in FIG. 39. It can be seen from the figure that there are short fibers of about 20 nm in diameter deposited on the surface of CoO particles. The carbon film and structural carbon on the surface of CoO substrate can be seen by transmission electron microscope. The thickness of the carbon film is about 20 nm, and the structural carbon consists of short carbon nanotube and anisotropic carbon, as shown in FIG. 39 (c) and (d). The experimental results also show that the electrical conductivity between prepared CoO substrate composite materials is very good.

### Example 22

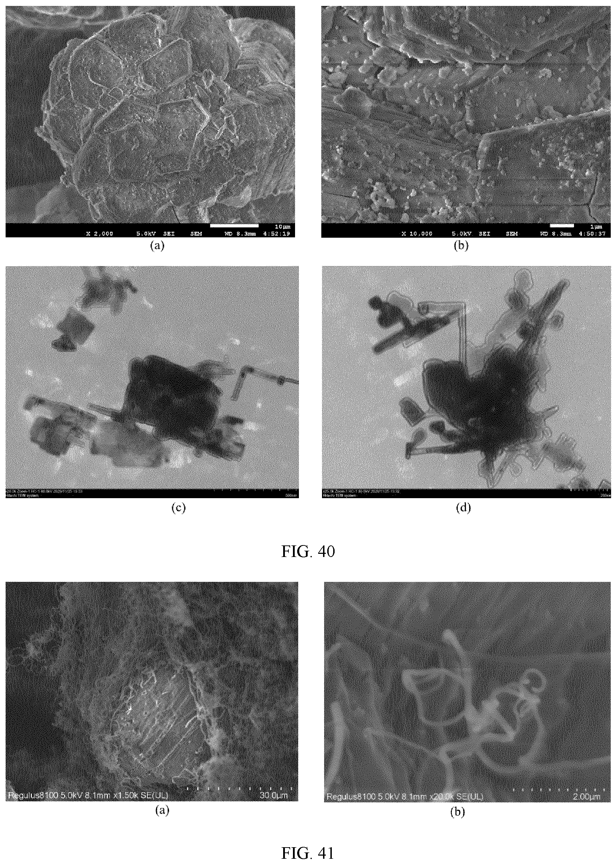

The carbon-based composite materials produced in this example and example 1 have the same structure, and the preparation method is as below. 2 g of LiCl and 0.2 g of FeCl₃ were dissolved into 38 g of deionized water to prepare the composite catalyst solution. Then, 5 g of Al₂O₃ powder and 1 g of composite catalyst solution were evenly mixed and dried in a 100°C drying oven for 20 minutes. The dried material was ground into powder followed by mixing with an appropriate amount of unsaturated fatty acid. Then, the sample was put into the furnace followed by vacuuming and inletting nitrogen. Then, the furnace was heated to 600°C followed by temperature holding of 1 hour. Then, the furnace was turn off followed by vacuuming the furnace at 300°C. When the furnace temperature was 30 °C, the sample was taken out. The morphology of the sample was observed by scanning electron microscope. The results are shown in FIG. 40 (a) and (b). The structural carbon of particulate was deposited on Al₂O₃ particles. The samples were observed by transmission electron microscope as shown in FIG. 40 (c) and (d). The thickness of carbon film on the surface of Al₂O₃ particles is about 15 nm, and the structural carbon consists of irregular protrusions and tubes. The experimental results also show that the prepared Al₂O₃ substrate composite material have good electrical conductivity.

### Example 23

The carbon-based composite materials produced in this example and example 1 have the same structure, and the preparation method is as below.

1 g of LiCl, 0.2 g of CuCl₂ and 0.2 g of nickel acetate were dissolved into 38 g of deionized water to prepare the composite catalyst solution. Then, 5 g of Al₂O₃ powder and 1 g of composite catalyst solution were evenly mixed and dried in a 100°C drying oven for 60 minutes. The dried material was ground into powder for use. Then, the samples were put into the heating furnace followed by heating the furnace to 500°C. Then, the furnace was vacuumed followed by inletting acetylene. The furnace temperature was kept at 500°C for 1 hour followed by turning off the furnace. When the furnace was cooled to 30°C, the sample was taken out. The morphology of the sample was observed by scanning electron microscope. The results are shown in FIG. 41 (a) and (b). The surface of Al₂O₃ particles is covered with intertwined carbon fibers with a diameter of about 100 nm, and the carbon fibers grow from the carbon film on the surface of Al₂O₃. Al₂O₃ powder was white before reaction and turn grey black after reaction, indicating that the powder surface is coated with a layer of carbon film.

### Example 24

The carbon-based composite materials produced in this example and example 1 have the same structure, and the preparation method is as below.

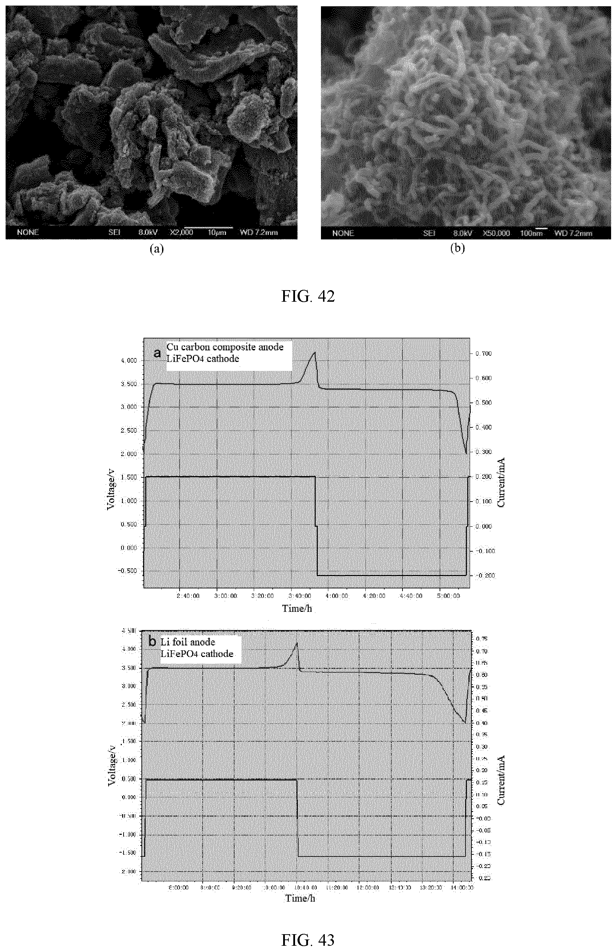

In this experiment, the catalyst was prepared by precursor method. Fumaric acid and calcium hydroxide were mixed and stirred at a molar ratio of 1:1. The obtained solution was dried in a drying oven at 60°C to obtain a white powder. The powder was ground to obtain a catalyst precursor. Then, the catalyst precursor was calcined in air atmosphere at 700°C for 1 hour to obtain CaCO₃ catalyst. Then, nitrogen was inlet into the tubular furnace to clean off the air in the tubular furnace to prevent explosion. The furnace was cooled to the deposition temperature of 600°C, followed by cutting off nitrogen and inletting acetylene for vacuumed 1 hour. After the reaction, the furnace was turn off followed by cutting off the acetylene gas and inletting a small amount of hydrogen as protective gas to prevent the deposition products from being oxidized by air. When the heating furnace temperature was 80°C, the sample was taken out. The sample was then observed with scanning electron microscope, and the result is as shown in FIG. 42. It can be seen from the figure that carbon fibers with a diameter of about 50 nm grow on the surface of CaCO₃, and the carbon fibers are intertwined with each other.

### Example 25

The electrochemical performance of the prepared composite material as the electrode of lithium-ion battery was tested as follows. The composite material with 8 micron copper foil as substrate produced by LiCl catalyst was punched into a 14 mm diameter disc with a die. LiFePO₄ powder, conductive graphite and PVDF were prepared into slurry at 85:5:10 mass ratio, and then the slurry was coated on the aluminum foil, followed by vacuum drying at 150°C for 8 hours to obtain LiFePO₄ positive electrode sheet. The 2025 button cells were assembled in argon (H₂O, O₂ < 1 ppm) glove box by using LiFePO₄ as cathode, copper substrate composite material and lithium metal as anodes and PP film (Celgard 2400) as separator and 1 m LiPF6 (EC/ DMC = 1:1) as electrolyte. The constant current charge and discharge performances of button cell were tested with constant current charge and discharge tester (Wuhan Land charge discharge tester). The test conditions are 2-4.2 v and current 50 mA/g. The test results are shown in FIG 43. The experimental results show that the prepared copper substrate composite material as anode has very good electrochemical properties.

## Claims

1. A carbon-based composite material, which characteristics comprises that the carbon-based composite materials is composed of the substrate, carbon film and structural carbon; the carbon film is bonded to the substrate surface and the structural carbon is bonded to the carbon film forming one body.

2. The carbon-based composite material according to claim 1, which is **characterized in that** the substrate refers to the solid material at room temperature except organic matter; the shape of substrate is not limited, including particle, fiber, film, plate, block, solid, hollow, porous, interworking hole, porous net and woven net; the surface area of the substrate ranges from 0.1 square nanometers to 1 billion square meters.

3. The carbon-based composite material according to claim 1, which is **characterized in that** the carbon film contains carbon, 0.0000000000001wt% - 99.99wt% of alkali metal and alkaline earth metal elements and 0.0000000000001wt% - 99.99wt% of other elements; the thickness of the carbon film is 0.01 nm-1 mm; the carbon film is continuous or discontinuous covering the substrate.

4. The carbon-based composite material according to claim 1, which is **characterized in that** the structural carbon contains carbon, 0.0000000000001wt% - 99.99wt% of alkali metal and alkaline earth metal elements and 0.0000000000001wt% - 99.99wt% of other elements; the structural carbon refers to the carbon containing material with arbitrary shape, including regular and irregular fiber, nanotube, flake and special-shaped;

5. A preparation method of carbon-based composite material according to any one of claims 1-4, which is **characterized in that** it comprises the following steps:
(A1) the catalyst mixture is coated on the substrate surface followed by drying under required conditions;
(A2) the substrate loaded with catalyst mixture is placed in a heating furnace with certain atmosphere, followed by heating the heating furnace to a temperature of - 50-1500°C and temperature holding of 0-1000 hours to decompose, melt and mix evenly the catalyst mixture and to let the catalyst infiltrate the substrate surface;
(A3) the atmosphere in the heating furnace is adjusted to replace the atmosphere in the step (A2), followed by adjusting the heating furnace to the reaction temperature of -50-1500°C and adjusting the atmosphere in the heating furnace according to the need, then the carbon containing organic matter is inlet into the heating furnace followed by temperature holding of 0-1000 hours to let the carbon containing organic matter react under the action of the catalyst forming the carbon film and the structural carbon on the substrate;
(A4) the heating furnace is turn off and its atmosphere is adjusted as needed to avoid side reactions to let furnace cool to -50-100°C to obtain the carbon-based composite material;
in the step (A2), (A3) and (A4), the furnace atmosphere is adjusted according to the actual reaction process; when the furnace atmosphere required between adjacent steps is consistent, the adjustment of atmosphere in subsequent steps is omitted;
or includes the following steps:
(B1) the catalyst mixture is coated on the substrate surface followed by drying and coating the carbon containing organic matter to prepare the reaction precursor; or the catalyst mixture is mixed with the substrate followed by mixing with carbon containing organic matter to prepare the reaction precursor;
(B2) the reaction precursor is heated in a heating furnace with required atmosphere to a temperature of -50-1500°C followed by temperature holding of 0-1000 hours to generate the carbon film covering the substrate and structural carbon on the surface of the carbon film;
(B3) the heating furnace is turn off and its atmosphere is adjusted as needed to avoid side reactions to let the furnace cool to -50-100°C to obtain carbon based composite material;
in the step (B 1), it is preferred to mix the catalyst mixture with the granular substrate and carbon containing organic matter to prepare the reaction precursor, and it is preferred to coat the catalyst mixture on the substrates of film, plate and block shapes followed by coating the carbon containing organic matter to prepare the reaction precursor;
in the steps (B2) and (B3), the furnace atmosphere is adjusted according to the actual reaction process; when the furnace atmosphere required between adjacent steps is consistent, the adjustment of atmosphere in subsequent steps is omitted;

6. The preparation method of carbon-based composite material according to claim 5, which is **characterized in that** the substrate to be coated in steps (A1) and (B1) is cleaned by various methods followed by drying under appropriate conditions; herein the drying temperature is -50-1000°C, and the drying time is 0-1000 hours; the catalyst mixture is then coated on the substrate by any realizable methods including spraying, dipping, wiping, scraping, brushing, drenching, wiping, roller coating, printing, printing followed by drying in any suitable atmosphere; the catalysts in steps (A1) and (B1) refer to the simple substances, organic compounds and inorganic compounds of alkali metals and alkaline earth metals and their mixtures.

7. The preparation method of carbon-based composite materials according to claim 6, which is **characterized in that** the catalyst mixture is a uniformly dispersed solution, suspension, paste or powder of one or more catalyst compounds; the content of the catalyst in catalyst mixture is 0.00000001wt% - 99wt%.

8. The preparation method of carbon-based composite material according to claim 7, which is **characterized in that** the catalyst mixture also contains the additives, surfactant and thickeners; the additives refer to any compounds for controlling the morphology of structural carbon and preparing the carbon-based composite materials consisting of one type of carbon-based composite material and compound-substrate carbon-based composite material; the mass fraction of additives, surfactant and thickeners in the catalyst mixture is 0-99%; the carbon containing organic matter in steps (A3) and (B1) include alcohols, organic acids, alkenes, alkanes, alkynes, ketones, various carbonaceous gases, sugars, various resins and mixtures of the above substances.

9. The carbon-based composite material prepared according to any one of claims 5-8 is used as the electrode materials of capacitor and battery.
